(19)

**Europäisches Patentamt**
**European Patent Office**
**Office européen des brevets**

(11) **EP 4 703 971 A1**

(12) **EUROPEAN PATENT APPLICATION**

(43) Date of publication:
04.03.2026 Bulletin 2026/10

(21) Application number: 25198180.9

(22) Date of filing: 26.08.2025

(51) International Patent Classification (IPC):
$G06N\ 3/045^{(2023.01)}$ $\quad G06N\ 3/0464^{(2023.01)}$
$G06N\ 3/047^{(2023.01)}$ $\quad G06N\ 3/0475^{(2023.01)}$
$G06N\ 3/084^{(2023.01)}$ $\quad G06N\ 3/094^{(2023.01)}$

(52) Cooperative Patent Classification (CPC):
G06N 3/0475; G06N 3/045; G06N 3/0464;
G06N 3/047; G06N 3/084; G06N 3/094

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 26.08.2024 JP 2024144469

(71) Applicant: Rakuten Group, Inc.
Setagaya-ku
Tokyo 158-0094 (JP)

(72) Inventors:
• LEE, Sehyung
  Setagaya-ku, Tokyo, 158-0094 (JP)
• CHAE, Yeongnam
  Setagaya-ku, Tokyo, 158-0094 (JP)
• KIM, Mijung
  Setagaya-ku, Tokyo, 158-0094 (JP)
• STENGER, Bjorn
  Setagaya-ku, Tokyo, 158-0094 (JP)

(74) Representative: Hoffmann Eitle
Patent- und Rechtsanwälte PartmbB
Arabellastraße 30
81925 München (DE)

(54) **LEARNING SYSTEM, LEARNING METHOD, AND PROGRAM**

(57) Provided is a learning system (1) for executing learning of a generator of a generative adversarial network (GAN) which allows a user to control a plurality of features relating to a generated image. A portion code acquisition module (107) acquires a plurality of portion codes respectively corresponding to the plurality of features based on a latent code for generating the generated image and a plurality of mapping networks respectively corresponding to the plurality of features. A generated image generation module (105) generates the generated image based on image synthesis networks that generates the generated image through use of the plurality of portion codes. A generator learning module (106) executes the learning of the generator including the plurality of mapping networks and the image synthesis networks based on the generated image and a trained discriminator of the GAN.

**FIG.6**

EP 4 703 971 A1

**Description**

BACKGROUND OF THE INVENTION

Field of the Invention

The present disclosure relates to a learning system, a learning method, and a program.

Description of the Related Art

Hitherto, a generative adversarial network (GAN) which generates an image has been known in the field of machine learning. The image generated by the GAN is hereinafter referred to as "generated image." For example, in Non-patent Literature 1 (Tero Karras, Miika Aittala, Samuli Laine, Erik Harkonen, Janne Hellsten, Jaakko Lehtinen, and Timo Aila. Alias-free generative adversarial networks. Advances in Neural Information Processing Systems, 34:852-863, 2021.), Non-patent Literature 2 (Tero Karras, Samuli Laine, and Timo Aila. A style-based generator architecture for generative adversarial networks. In Proceedings of the IEEE/CVF conference on computer vision and pattern recognition, pages 4401-4410, 2019.), and Non-patent Literature 3 (Tero Karras, Samuli Laine, Miika Aittala, Janne Hellsten, Jaakko Lehtinen, and Timo Aila. Analyzing and improving the image quality of StyleGAN. In Proceedings of the IEEE/CVF conference on computer vision and pattern recognition, pages 8110-8119, 2020.), there is described a GAN which allows a user to control a plurality of features (for example, a degree of smile, an age, and a hairstyle) relating to the generated image. When the user specifies a desired feature, a latent code generated based on the specified feature is input to a generator of a trained GAN. The generator generates, based on the latent code, a generated image having the feature desired by the user.

SUMMARY OF THE INVENTION

However, in the technology of each of Non-patent Literature 1, Non-patent Literature 2, and Non-patent Literature 3, the generator of the GAN generates a generated image based on the entire latent code, and hence it has not been possible to accurately learn which portion of the latent code corresponds to which feature among a plurality of features. Thus, with the technology of each of Non-patent Literature 1, Non-patent Literature 2, and Non-patent Literature 3, it has not been possible to sufficiently increase accuracy of the GAN.
One object of the present disclosure is to increase the accuracy of the GAN.
According to the present disclosure, there is provided a learning system for executing learning of a generator of a generative adversarial network (GAN) which allows a user to control a plurality of features relating to a generated image, the learning system including: a portion code acquisition module configured to acquire a plurality of portion codes respectively corresponding to the plurality of features based on a latent code for generating the generated image and a plurality of mapping networks respectively corresponding to the plurality of features; a generated image generation module configured to generate the generated image based on image synthesis networks configured to generate the generated image through use of the plurality of portion codes; and a generator learning module configured to execute the learning of the generator including the plurality of mapping networks and the image synthesis networks based on the generated image and a trained discriminator of the GAN.
According to the present disclosure, for example, it is possible to increase the accuracy of the GAN.

BRIEF DESCRIPTION OF THE DRAWINGS

FIG. 1 is a diagram for illustrating an example of a hardware configuration of a learning system.
FIG. 2 is a diagram for illustrating an example of a GAN which allows a user to control features relating to a generated image.
FIG. 3 is a diagram for illustrating an example of functions implemented in the learning system.
FIG. 4 is a diagram for illustrating an example of functions for learning of a discriminator.
FIG. 5 is a table for showing an example of a discrimination image database.
FIG. 6 is a diagram for illustrating an example of functions for learning of a generator.
FIG. 7 is a table for showing an example of a generated image database.
FIG. 8 is a diagram for illustrating an example of functions for learning of a generator.
FIG. 9 is a diagram for illustrating an example of the functions for the learning of the generator.
FIG. 10 is a flowchart for illustrating an example of processing executed in the learning system.

FIG. 11 is a flowchart for illustrating the example of the processing executed in the learning system.

DESCRIPTION OF THE EMBODIMENTS

[1. Hardware Configuration of Learning System]

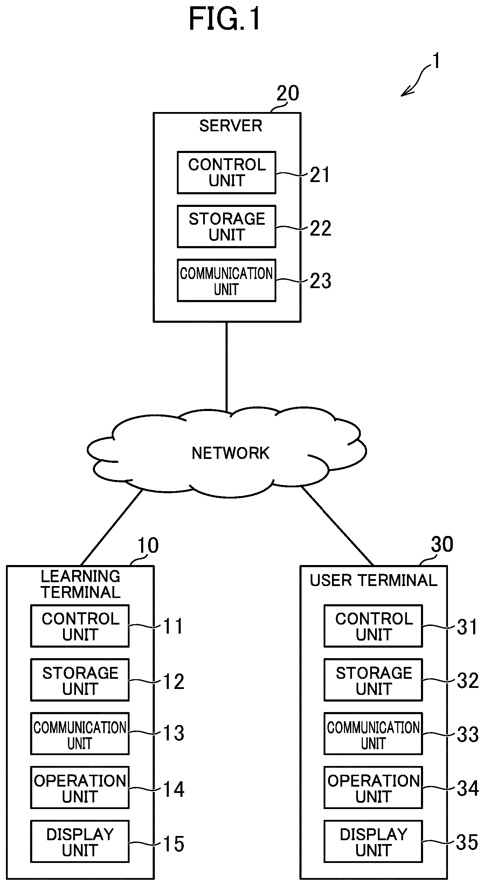

An example of a learning system, a learning method, and a program according to an embodiment of the present disclosure is described. FIG. 1 is a diagram for illustrating an example of a hardware configuration of the learning system. For example, a learning system 1 includes a learning terminal 10, a server 20, and a user terminal 30. The learning terminal 10, the server 20, and the user terminal 30 are each connected to a network, such as the Internet or a local area network (LAN).

The learning terminal 10 is a computer which executes learning of a generative adversarial network (GAN) which generates an image. An image generated by the GAN is hereinafter referred to as "generated image." For example, the learning terminal 10 is a personal computer, a server computer, a tablet terminal, or a smartphone. For example, the learning terminal 10 includes a control unit 11, a storage unit 12, a communication unit 13, an operation unit 14, and a display unit 15.

For example, the control unit 11 includes at least one processor. The storage unit 12 includes at least one of a volatile memory such as a RAM, or a non-volatile memory such as a flash memory. The communication unit 13 includes at least one of a communication interface for wired communication or a communication interface for wireless communication. The operation unit 14 is an input device such as a touch panel or a mouse. The display unit 15 is a display such as a liquid crystal display or an organic EL display.

The server 20 is a server computer which stores the trained GAN. For example, the server 20 includes a control unit 21, a storage unit 22, and a communication unit 23. Hardware configurations of the control unit 21, the storage unit 22, and the communication unit 23 may be the same as those of the control unit 11, the storage unit 12, and the communication unit 13, respectively.

The user terminal 30 is a computer of a user who uses the trained GAN. For example, the user terminal 30 is a personal computer, a smartphone, a tablet terminal, or a wearable terminal. For example, the user terminal 30 includes a control unit 31, a storage unit 32, a communication unit 33, an operation unit 34, and a display unit 35. Hardware configurations of the control unit 31, the storage unit 32, the communication unit 33, the operation unit 34, and the display unit 35 may be the same as those of the control unit 11, the storage unit 12, the communication unit 13, the operation unit 14, and the display unit 15, respectively.

Programs stored in the storage units 12, 22, and 32 may be supplied to the learning terminal 10, the server 20, or the user terminal 30 through the network. Moreover, the learning terminal 10, the server 20, or the user terminal 30 may include at least one of a reading unit (for example, a memory card slot) for reading a computer-readable information storage medium or an input/output unit (for example, a USB port) through which data is input from or output to an external device. For example, a program stored in the information storage medium may be supplied to the learning terminal 10, the server 20, or the user terminal 30 through at least one of the reading unit or the input/output unit.

Further, the learning system 1 is only required to include at least one computer. The computers included in the learning system 1 are not limited to the example of FIG. 1. For example, the learning system 1 may include only the learning terminal 10. In this case, the server 20 and the user terminal 30 exist outside the learning system 1. The learning system 1 may include only the learning terminal 10 and the server 20. In this case, the user terminal 30 exists outside the learning system 1. The learning system 1 may include only other computers not shown in FIG. 1.

[2. Overview of Learning System]

For example, the GAN generates a generated image based on a latent code described later. When the GAN generates the generated image based on a completely randomly generated latent code, the GAN may not generate a generated image having a feature desired by the user. The feature as used herein is a visual feature of the generated image. For example, a shape, an outer appearance, a size, a brightness, and an arrangement place of an object (for example, a person, an animal, scenery, or a building) appearing in the generated image correspond to the features. The feature can also be considered as a style, a condition, or an attribute of the generated image.

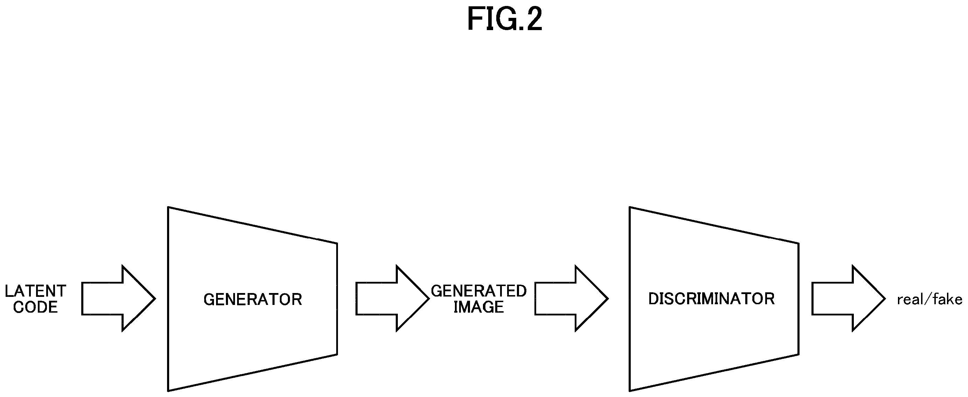

FIG. 2 is a diagram for illustrating an example of the GAN which allows the user to control the features relating to the generated image. For example, as research relating to the GAN which generates the generated image having features desired by the user, research relating to the latent conditioned (LC)-GAN, the conditional GAN, the StyleGAN, or the self-supervised style decomposition (SSD)-GAN is being conducted. A portion simply described as "feature" hereinafter means not a feature vector calculated by the GAN, but the feature to be controlled. In this embodiment, the user can control each of a plurality of features.

As illustrated in FIG. 2, the GAN includes a generator which generates the generated image and a discriminator which discriminates the generated image. The generator is a model which generates the generated image based on a latent code corresponding to features desired by the user. For example, the generator is a convolutional neural network or a fully connected neural network. As the generator, a publicly-known another method may be used. In recent years, a method called "Transformer" used mainly for natural language processing is sometimes used for image generation, and hence the generator may be one which uses this method.

The latent code is information used to transmit the feature desired by the user to the generator. For example, the latent code is expressed in a vector form. The latent code is also sometimes referred to as "random noise" or "condition vector." The latent code may be expressed in another form other than the vector. For example, in a GAN which generates a generated image indicating a face of an animal, it is assumed that the user can control two features which are a shape and an outer appearance. When the user specifies those two features, a latent code corresponding to each of the shape and the outer appearance specified by the user is generated. The user is not required to specify all of the features and may specify only some of the features.

For example, the generator generates the generated image based on the latent code input to the generator itself. The generator may generate a generated image based on random noise independent of the latent code. When the latent code is input, the generator may transform the latent code into a more appropriate expression based on a mapping network. The generator outputs the generated image corresponding to the latent code based on parameters of the generator itself. For processing in which the generator outputs the generated image based on the latent code, the parameters of the generator are referred to.

The discriminator discriminates authenticity of the generated image. In the case of the controllable GAN, the discriminator discriminates whether or not the generated image has the features desired by the user. That is, the discriminator discriminates whether or not the generated image is an image corresponding to the latent code. For example, the discriminator is a convolutional neural network or a fully connected neural network. As the discriminator, a publicly-known another method may be used. In recent years, the method called "Transformer" mainly used for natural language processing is sometimes used for image generation, and hence the discriminator may be one which uses this method.

For example, when the generated image is input to the discriminator itself, the discriminator executes processing such as convolution based on parameters of the discriminator itself, to thereby calculate a feature vector relating to the generated image. The discriminator outputs a discrimination result corresponding to this feature vector. The discrimination result may be a label indicating the authenticity of the generated image, a score indicating a probability of the authenticity of the generated image, a label indicating whether or not the generated image is an image corresponding to the latent code, a score indicating a probability that the generated image is an image corresponding to the latent code, or a combination thereof. The series of processing steps from the input of the generated image to the discriminator to the output of the discrimination result by the discriminator may be the same as those of publicly-known processing.

As described above, the GAN includes the generator and the discriminator. As the learning of the GAN, learning of the discriminator is generally executed first. After the learning of the discriminator has completed to a certain degree, learning of the generator is executed. During the learning of the generator, the parameters of the discriminator may be fixed. After that, the learning of the discriminator and the learning of the generator may be repeated. When a latent code for the user to control a plurality of features is input to the generator, each portion of the latent code corresponds to an individual feature. For example, when two features including the shape and the outer appearance are controllable by the user, a specific portion of the latent code corresponds to the shape. Another portion of the latent code corresponds to the outer appearance. In order for the generator to generate the generated image corresponding to each feature, it is required to cause the generator to learn which feature each individual portion of the latent code corresponds to.

Thus, the learning system 1 according to this embodiment divides a latent code for training into portions corresponding to the respective plurality of features. Each individual portion is hereinafter referred to as "portion code." The latent code is divided into a plurality of portion codes. The generator generates the generated image based on each of the plurality of portion codes. The discriminator estimates the authenticity of the generated image, and the generator is trained. For example, in the learning of the generator, a spectral normalization technology described later is used, thereby causing the generator to easily recognize which portion of the latent code corresponds to which feature. The learning system 1 also has other functions for the learning of the generator and functions for the learning of the discriminator. The learning system 1 is designed to increase the accuracy of the GAN by at least one of those functions. Details of the learning system 1 are now described.

[3. Functions Implemented in Learning System]

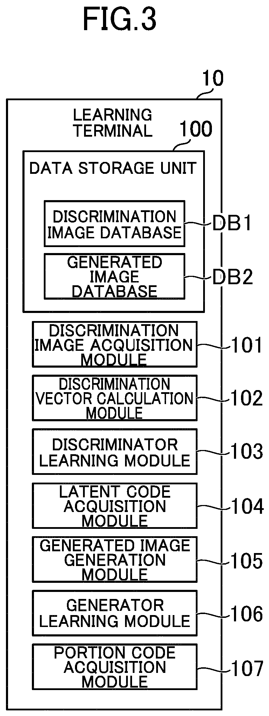

FIG. 3 is a diagram for illustrating an example of functions implemented in the learning system 1. In this embodiment, a case in which main functions for the learning of the GAN are implemented on the learning terminal 10 is taken as an example. In this embodiment, processing at the time of the learning of the GAN which generates a generated image representing a face of an animal is taken as an example. Further, as the features controllable by the user, two features including the shape and the outer appearance are taken as an example. The shape is the shape of a surface of an object. The shape can also be said to be a contour of the object. The outer appearance is how the object appears. For example, the outer appearance is a color, a texture pattern, or brightness.

The features controllable by the user are not limited to the shape and the outer appearance. For example, the features controllable by the user may be four features including a position and orientation of a camera photographing an object, global identity which is an overall appearance of the object, local identity which is a local appearance of the object, and a color. The feature controllable by the user may be another feature. For example, the feature controllable by the user may be a facial expression, a contour of the face, a color of the eyes, a color of the hair, brightness, a background, or another feature. The number of features controllable by the user is also not limited to two or four, and may be any number.

[3-1. Functions for Learning of Discriminator]

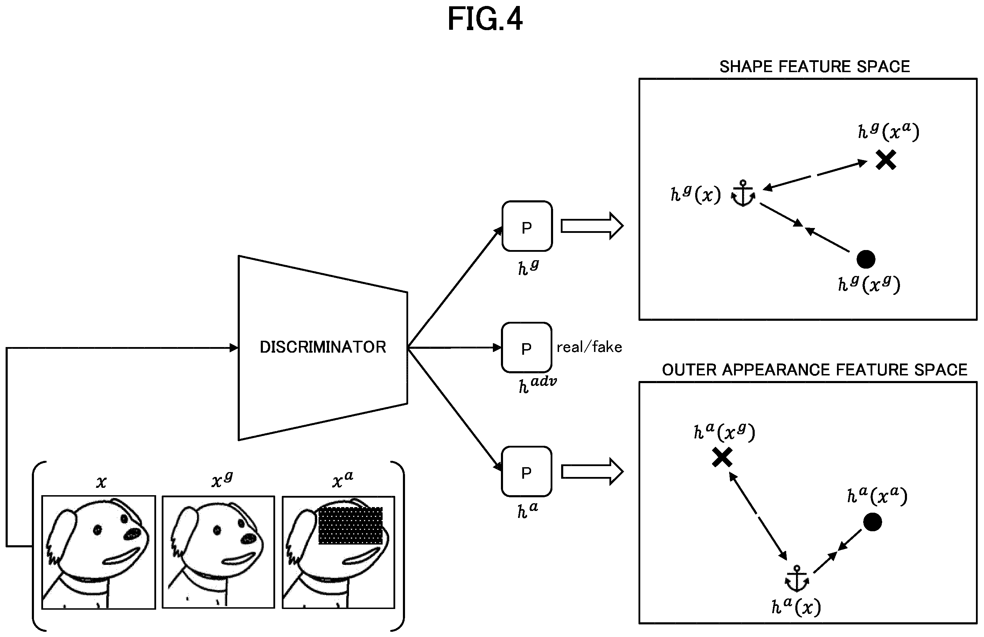

FIG. 4 is a diagram for illustrating an example of the functions for the learning of the discriminator. While using the diagram for illustrating the functions of the learning terminal 10 illustrated in FIG. 3, and referring to FIG. 4, the functions for the learning of the discriminator are described. As illustrated in FIG. 3, for example, the learning terminal 10 includes, as the functions for the learning of the discriminator, a data storage unit 100, a discrimination image acquisition module 101, a discrimination vector calculation module 102, and a discriminator learning module 103. The data storage unit 100 is implemented by the storage unit 12. Each of the discrimination image acquisition module 101, the discrimination vector calculation module 102, and the discriminator learning module 103 is implemented by the control unit 11. With those functions, the learning system 1 executes the learning of the discriminator of the GAN which allows the user to control the plurality of features relating to the generated image.

[Data Storage Unit]

The data storage unit 100 stores data required for the learning of the discriminator. For example, the data storage unit 100 stores actual data on the GAN and a discrimination image database DB1.

The GAN having the actual data stored in the data storage unit 100 is a GAN before being trained. The GAN before being trained is a GAN having parameters being initial values. The actual data indicates a program of the GAN and the parameters of the GAN. For example, the data storage unit 100 stores actual data on the discriminator included in the actual data on the GAN. The actual data on the discriminator indicates a program of the discriminator and parameters of the discriminator. The parameters of the discriminator are referred to by the program of the discriminator. The parameters of the discriminator are adjusted by the discriminator learning module 103. For example, the parameters of the discriminator are weighting coefficients and biases. The parameters of the discriminator may be publicly-known parameters. For example, the parameters of the discriminator may be the number of hidden layers, the number of units of the hidden layers, or other hyperparameters.

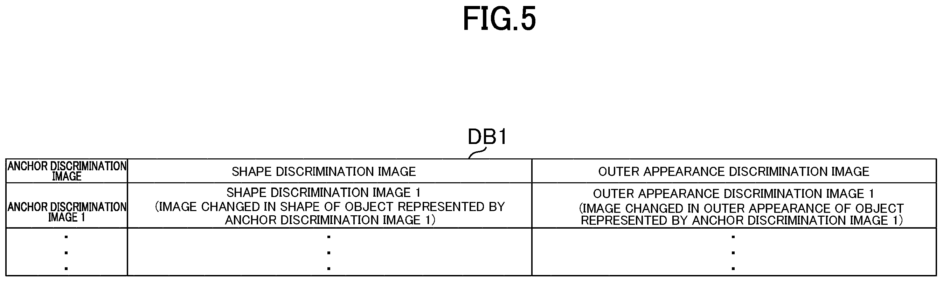

FIG. 5 is a table for showing an example of the discrimination image database DB1. The discrimination image database DB1 is a database which stores discrimination images being images for the learning of the discriminator. In this embodiment, three discrimination images which are an anchor discrimination image, a shape discrimination image, and an outer appearance discrimination image are used for the learning of the discriminator. When the anchor discrimination image, the shape discrimination image, and the outer appearance discrimination image are not distinguished from one another, each thereof is hereinafter simply referred to as "discrimination image." The discrimination image can also be considered as a training image used as training data for the discriminator. The learning terminal 10 can acquire the generated image stored in the discrimination image database DB1 at any time.

For example, in the discrimination image database DB1, image data on each of the anchor discrimination images, the shape discrimination image, and the outer appearance discrimination images is stored. In the discrimination image database DB1, any data may be stored. The data stored in the discrimination image database DB1 is not limited to the example of FIG. 5. For example, in the discrimination image database DB1, information indicating the feature that has been changed to generate the shape discrimination image and the outer appearance discrimination image out of the plurality of features controllable by the user may be stored.

The anchor discrimination image is an original image in which the features controllable by the user are not changed. For example, the anchor discrimination image may be a publicly-known image distributed with or without charge on the Internet. The anchor discrimination image is an image serving as a reference in metric learning. In this embodiment, the anchor discrimination image is hereinafter represented by "x" in a case of using a symbol. Any number of anchor discrimination images may be stored in the discrimination image database DB1. The objects represented by the individual anchor discrimination images may be the same as each other, or may be different from each other. In the example of FIG. 4, a dog corresponds to the object, but anchor discrimination images representing a respective plurality of animals may be mixed in the discrimination image database DB1.

The shape discrimination image is an image changed in the shape of the object from the anchor discrimination image. For example, the shape discrimination image may be an image generated by executing image processing such as affine transformation, linear transformation, or spline transformation on the anchor discrimination image. In learning in a feature space of the shape described later, the shape discrimination image is used as a positive discrimination image. The positive discrimination image is an image which is to be recognized by the discriminator as an image similar to the anchor discrimination information (image belonging to the same cluster as that of the anchor discrimination image) in the metric learning. Meanwhile, in learning in a feature space of the outer appearance described later, the shape discrimination image is used as a negative discrimination image described later. The negative discrimination image is an image to be recognized by the discriminator as an image different from the anchor discrimination information (image not belonging to the same cluster as that of the anchor discrimination image) in the metric learning. The shape discrimination image is hereinafter represented by $x^g$ in a case of using a symbol. In the example of FIG. 4, the shape discrimination image is changed in the shape (contour) of the dog indicated by the anchor discrimination image.

The outer appearance discrimination image is an image changed in the outer appearance of the object from the anchor discrimination image. For example, the outer appearance discrimination image may be an image generated by executing image processing such as color conversion processing, masking processing, cropping processing, or texture pasting on the anchor discrimination image. In the learning in the feature space of the outer appearance described later, the outer appearance discrimination image is used as the positive discrimination image. In the learning in the feature space of the shape described later, the outer appearance discrimination image is used as the negative discrimination image. The outer appearance discrimination image is hereinafter represented by $x^a$ in a case of using a symbol. In the example of FIG. 4, the outer appearance discrimination image is an image in which the appearance of the dog indicated by the anchor discrimination image has been changed by the masking processing.

The data stored in the data storage unit 100 is not limited to the above-mentioned example. The data storage unit 100 may store any data. For example, the data storage unit 100 may store a discriminator learning program indicating a series of processing steps in the learning of the discriminator. In the discriminator learning program, a program code which indicates each of the processing of the discrimination image acquisition module 101, the processing of the discrimination vector calculation module 102, a part of the processing of the discriminator learning module 103, and the processing of the discriminator learning module 103 is indicated. For example, the data storage unit 100 may store a feature change program for changing each of the plurality of features controllable in the GAN.

[Discrimination Image Acquisition Module]

The discrimination image acquisition module 101 acquires the discrimination image from the discrimination image database DB1. When the discrimination image is stored in a database other than the discrimination image database DB1, a computer other than the learning terminal 10, or an information storage medium, the discrimination image acquisition module 101 may acquire the discrimination image from the other database, the other computer, or the information storage medium. The discrimination image acquisition module 101 can acquire any number of discrimination images.

For example, the discrimination image acquisition module 101 acquires the anchor discrimination image and a feature discrimination image changed in each of a plurality of features. The feature discrimination image is an image changed in each of the features controllable by the user from the anchor discrimination image. The feature discrimination image is an image in which at least a part of the anchor discrimination image has been changed. A case in which there are as many feature discrimination images as the number of features controllable by the user for one anchor discrimination image is taken as an example, but there may be more feature discrimination images than the number of features controllable by the user for one anchor discrimination image.

In this embodiment, each of the shape and the outer appearance is changed as the feature, and hence the discrimination image acquisition module 101 acquires the anchor discrimination image, the shape discrimination image, and the outer appearance discrimination image. Each of the shape discrimination image and the outer appearance discrimination image is an example of the feature discrimination image. Thus, each of the shape discrimination image and the outer appearance discrimination image as used herein can be read as the feature discrimination image. For example, the discrimination image acquisition module 101 acquires two feature discrimination images which are the shape discrimination image and the outer appearance discrimination image for one anchor discrimination image.

In this embodiment, the metric learning is used for the learning of the discriminator, and hence the discrimination image acquisition module 101 acquires: the anchor discrimination image; and the plurality of feature discrimination images respectively corresponding to the plurality of features and having been changed in the features of the anchor discrimination image. For example, the discrimination image acquisition module 101 acquires, for the learning in the feature space of the shape, the anchor discrimination image, the shape discrimination image serving as the positive discrimination image, and the outer appearance discrimination image serving as the negative discrimination image. The discrimination image acquisition module 101 acquires, for the learning in the feature space of the outer appearance, the anchor discrimination image, the outer appearance discrimination image serving as the positive discrimination image, and the shape discrimination image serving as the negative discrimination image.

In this embodiment, a case in which the anchor discrimination image, the shape discrimination image, and the outer appearance discrimination image are stored in advance in the discrimination image database DB1 is taken as an example, but only the anchor discrimination image may be initially stored in the discrimination image database DB1. The discrimination image acquisition module 101 may generate the shape discrimination image and the outer appearance discrimination image based on the anchor discrimination image. In this case, the discrimination image acquisition module 101 generates the shape discrimination image and the outer appearance discrimination image by executing image processing on the anchor discrimination image. It is assumed that a program for the image processing is stored in advance in the data storage unit 100.

For example, the discrimination image acquisition module 101 generates the shape discrimination image by executing image processing (for example, the above-mentioned affine transformation) for changing the shape of the object on the anchor discrimination image. The discrimination image acquisition module 101 generates the outer appearance discrimination image by executing image processing (for example, the above-mentioned masking processing) for changing the outer appearance of the object on the anchor discrimination image. The discrimination image acquisition module 101 stores the generated shape discrimination image and outer appearance discrimination image in the discrimination image database DB1.

[Discrimination Vector Calculation Module]

The discrimination vector calculation module 102 calculates a discrimination vector, which is a feature vector of the discrimination image, based on the discriminator. For example, the discrimination vector calculation module 102 calculates, for each feature space corresponding to each of the plurality of features, based on the discriminator, an anchor discrimination vector relating to the anchor discrimination image, a positive discrimination vector relating to the feature discrimination image corresponding to this feature, and a negative discrimination vector relating to the feature discrimination image corresponding to another feature. When the anchor discrimination vector, the positive discrimination vector, and the negative discrimination vector are not distinguished from one another, each thereof is simply referred to as "discrimination vector." The calculation of those vectors is sometimes referred to as "mapping to the feature space."

The feature space is a multi-dimensional space. There exist as many feature spaces as, or more feature spaces than, the number of features controllable by the user. The discriminator calculates the feature vector in each of the plurality of feature spaces for an image input to the discriminator itself. The parameter of the discriminator for calculating the feature vector in a certain feature space and the parameter of the discriminator for calculating the feature vector in another feature space are different from each other. There exist as many parameters of the discriminator as, or more parameters of the discriminator than, the number of the features controllable by the user. In this embodiment, three parameters which are a parameter for discriminating the authenticity, a parameter for a feature space corresponding to the shape, and a parameter for a feature space corresponding to the outer appearance exist in the discriminator. Another parameter may exist in the discriminator.

In this embodiment, a case in which a program for calculating the feature vector in a certain feature space and a program for calculating the feature vector in another feature space are the same is taken as an example. Even when those programs are the same, the parameter for calculating the feature vector in a certain feature space and the parameter for calculating the feature vector in another feature space are different from each other, and hence different feature vectors are calculated for the same image. Those programs may be different from each other. There may exist as many programs of the discriminator as, or more programs of the discriminator than, the number of the features controllable by the user.

The anchor discrimination vector is a feature vector of the anchor discrimination image. The positive discrimination vector is a feature vector of the positive discrimination image. The negative discrimination vector is a feature vector of the negative discrimination image. The set of the anchor discrimination image, the positive discrimination image, and the negative discrimination image is hereinafter referred to as "discrimination image set." For one certain discrimination image set, a set of three feature vectors which are the anchor discrimination vector, the positive discrimination vector, and the negative discrimination vector is calculated. When the number of features controllable by the user is represented by X (X is an integer equal to or larger than 2), and the number of discrimination image sets is represented by Y (Y is an integer equal to or larger than 2), at least $X \times Y \times 3$ feature vectors are calculated.

In this embodiment, a case in which a feature space for discriminating the authenticity of an image (for example, discrimination image) input to the discriminator itself and a feature space corresponding to each of the plurality of features controllable by the user exist is taken as an example. In this embodiment, the number of features controllable by the user is two, and hence the discriminator calculates the feature vector in each of at least two feature spaces as illustrated in FIG. 4. In the example of FIG. 4, the output of the discriminator is denoted by a symbol of P. Further, a projection head for projecting the discrimination image into the feature space is indicated by a symbol of "h". The projection head is a program and parameters for calculating a feature vector in the feature space from the discrimination image. For example, each layer such as a fully connected layer and an embedding layer corresponds to the projection head. The projection head reduces the number of dimensions of the feature vector, but it is not particularly required to reduce the number of dimensions.

In the example of FIG. 4, the symbol $h^g$ is a projection head for projecting the discrimination image into a shape feature space being the feature space of the shape. The symbol $h^g(x)$ is the anchor discrimination vector of the anchor discrimination image in the shape feature space. The discrimination vector calculation module 102 calculates an anchor discrimination vector $h^g(x)$ of the anchor discrimination image based on the anchor discrimination image in the shape feature space and the projection head in the shape feature space. The symbol $h^g(x^g)$ is the positive discrimination vector of the positive discrimination image (shape discrimination image) in the shape feature space. The discrimination vector calculation module 102 calculates a positive discrimination vector $h^g(x^g)$ of the positive discrimination image based on the positive discrimination image in the shape feature space and the projection head in the shape feature space. The symbol $h^g(x^a)$ is the negative discrimination vector of the negative discrimination image (outer appearance discrimination image) in the shape feature space. The discrimination vector calculation module 102 calculates a negative discrimination vector $h^g(x^a)$ of the negative discrimination image based on the negative discrimination image in the shape feature space and the projection head in the shape feature space.

In the example of FIG. 4, the symbol $h^{adv}$ is a projection head for projecting the discrimination image into an authenticity feature space being a feature space of the authenticity. The feature space of the authenticity may be the same as the feature space employed in a publicly-known GAN. In FIG. 4, the authenticity feature space is omitted for the sake of space. The discrimination vector calculation module 102 calculates the feature vector of each of the anchor discrimination image, the shape discrimination image, and the outer appearance discrimination image in the authenticity feature space as well. For example, the discrimination vector calculation module 102 uses the projection head to reduce the dimensions of the output from the discriminator, to thereby calculate the feature vector in the feature space for discriminating the authenticity. Based on this feature vector, the authenticity of the image input to the discriminator is discriminated. When the discriminator can be trained with high accuracy, the discriminator estimates the anchor discrimination image to be real. The discriminator estimates the shape discrimination image and the outer appearance discrimination image to be fake.

In the example of FIG. 4, $h^a$ is a projection head for projecting the discrimination image into an outer appearance feature space being the feature space of the outer appearance. The symbol $h^a(x)$ is the anchor discrimination vector of the anchor discrimination image in the outer appearance feature space. The discrimination vector calculation module 102 calculates an anchor discrimination vector $h^a(x)$ of the anchor discrimination image based on the anchor discrimination image in the outer appearance feature space and the projection head in the outer appearance feature space. The symbol $h^a(x^a)$ is the positive discrimination vector of the positive discrimination image (outer appearance discrimination image) in the outer appearance feature space. The discrimination vector calculation module 102 calculates a positive discrimination vector $h^a(x^a)$ of the positive discrimination image based on the positive discrimination image in the outer appearance feature space and the projection head in the outer appearance feature space. The symbol $h^a(x^g)$ is the negative discrimination vector of the negative discrimination image (shape discrimination image) in the outer appearance feature space. The discrimination vector calculation module 102 calculates a negative discrimination vector $h^a(x^g)$ of the negative discrimination image based on the negative discrimination image in the outer appearance feature space and the projection head in the outer appearance feature space.

[Discriminator Learning Module]

The discriminator learning module 103 executes the learning of the discriminator based on the discrimination vector calculated by the discrimination vector calculation module 102. For example, the discriminator learning module 103 causes the discriminator to estimate the authenticity of the anchor discrimination image and the authenticity of the generated image generated by the generator of the GAN. The estimation as used herein can also be considered as discrimination. The estimation by the discriminator learning module 103 is executed based on the discriminator being trained. That is, the discriminator learning module 103 executes the estimation based on the current parameters of the discriminator. For example, the discriminator learning module 103 inputs the anchor discrimination image to the discriminator. The discriminator calculates the anchor discrimination vector of the anchor discrimination image in the feature space for the discrimination of the authenticity. The discriminator outputs an estimation result of the authenticity based on this anchor discrimination vector. The discriminator learning module 103 acquires the estimation result of the authenticity output from the discriminator.

In this embodiment, the plurality of anchor discrimination images are prepared, and hence the discriminator learning module 103 causes the discriminator to estimate the authenticity of each of the plurality of anchor discrimination images. The discriminator learning module 103 successively inputs each of the plurality of anchor discrimination images to the discriminator, and acquires the estimation result of the authenticity of each anchor discrimination image from the discriminator. The estimation method for the authenticity of each anchor discrimination image is as described above. The discriminator learning module 103 causes the discriminator to learn so that the anchor discrimination images are estimated to be real.

For example, the discriminator learning module 103 executes the learning of the discriminator such that, in the feature space corresponding to each of the plurality of features, the anchor discrimination vector and the positive discrimination vector approach each other, and the anchor discrimination vector and the negative discrimination vector become distant from each other. In other words, the discriminator learning module 103 executes the learning of the discriminator such that, in the feature space corresponding to each of the plurality of features, the anchor discrimination vector and the positive discrimination vector belong to the same cluster, and the anchor discrimination vector and the negative discrimination vector do not belong to the same cluster.

An algorithm itself for the learning may be a publicly-known algorithm used for the metric learning. For example, for the learning of the discriminator, an algorithm such as the gradient descent method, the gradient penalty method, the stochastic gradient flow method, or the variational inference method may be used. In this embodiment, a mutual relationship among three discrimination images is used for the learning, and hence the discriminator learning module 103 executes, based on a loss function of the triplet margin loss, the learning of the discriminator such that the anchor discrimination vector and the positive discrimination vector approach each other, and the anchor discrimination vector and the negative discrimination vector become distant from each other. The loss function as described in this embodiment is an example of the loss function of the triplet margin loss.

For example, the discriminator learning module 103 adjusts, in the feature space corresponding to each of the plurality of features, the parameter of this feature such that the anchor discrimination vector and the positive discrimination vector approach each other, and the anchor discrimination vector and the negative discrimination vector become distant from each other, to thereby execute the learning of the discriminator. The discriminator learning module 103 calculates, based on the loss function in the metric learning, in the feature space corresponding to each of the plurality of features, a loss indicating closeness between the anchor discrimination vector and the positive discrimination vector and farness between the anchor discrimination vector and the negative discrimination vector, and adjusts the parameter of this feature such that this loss decreases.

In this embodiment, as illustrated in FIG. 4, the discriminator learning module 103 adjusts, in the shape feature space, the parameter of the shape such that the anchor discrimination vector of the anchor discrimination image and the positive discrimination vector of the positive discrimination image of the shape (shape discrimination image) approach each other, and this anchor discrimination vector and the negative discrimination vector of the negative discrimination image of the shape (outer appearance discrimination image) become distant from each other, to thereby execute the learning of the discriminator. The discriminator learning module 103 calculates, based on the loss function in the metric learning, in the shape feature space, the loss indicating the closeness between the anchor discrimination vector and the positive discrimination vector and the farness between the anchor discrimination vector and the negative discrimination vector, and adjusts the parameter of the shape such that this loss decreases.

For example, as illustrated in FIG. 4, the discriminator learning module 103 adjusts, in the outer appearance feature space, the parameter of the outer appearance such that the anchor discrimination vector of the anchor discrimination image and the positive discrimination vector of the positive discrimination image of the outer appearance (outer appearance discrimination image) approach each other, and this anchor discrimination vector and the negative discrimination vector of the negative discrimination image of the outer appearance (shape discrimination image) become distant from each other, to thereby execute the learning of the discriminator. The discriminator learning module 103 calculates, based on the loss function in the metric learning, in the outer appearance feature space, the loss indicating the closeness between the anchor discrimination vector and the positive discrimination vector and the farness between the anchor discrimination vector and the negative discrimination vector, and adjusts the parameter of the outer appearance such that this loss decreases.

In this embodiment, the discriminator learning module 103 calculates, for each anchor discrimination image, a contrastive discrimination loss relating to the closeness between the anchor discrimination vector of this anchor discrimination image and the positive discrimination vector of the positive discrimination image of this anchor discrimination image and the closeness between the anchor discrimination vector of this anchor discrimination image and the negative discrimination vector of the negative discrimination image of this anchor discrimination image. The discriminator learning module 103 executes the learning of the discriminator based on the contrastive discrimination loss. The discriminator learning module 103 executes the learning of the discriminator such that the contrastive discrimination loss decreases.

The contrastive discrimination loss is a contrastive loss calculated based on the discrimination image. The contrastive loss is a loss used in the metric learning (similarity learning). The contrastive loss is a loss which causes pieces of data in the same class to approach each other and causes pieces of data in different classes to become distant from each other. As a calculation expression itself for the contrastive loss, a publicly-known calculation expression can be used. In this embodiment, the discriminator learning module 103 calculates the contrastive discrimination loss based on Equation 1. The discriminator learning module 103 executes the learning of the discriminator such that the contrastive discrimination loss decreases. Equation 1 is an example of an expression for evaluating a difference between the anchor discrimination image and the positive discrimination image and a difference between the anchor discrimination image and the negative discrimination image.

[Equation 1]

$$\mathcal{L}_{cl}^{D} = C(h^{g}(\mathbf{x}), h^{g}(\mathbf{x}^{g}), h^{g}(\mathbf{x}^{a})) + C(h^{a}(\mathbf{x}), h^{a}(\mathbf{x}^{a}), h^{a}(\mathbf{x}^{g}))$$

For example, a function C in Equation 1 is defined by Equation 2. In Equation 2, $f^{T}$ represents the anchor discrimination vector. In Equation 2, $f^{+}$ represents the positive discrimination vector. In Equation 2, $f^{-}$ represents the negative discrimination vector. In Equation 2, $\tau$ represents a temperature parameter indicating influence of the positive discrimination image and the negative discrimination image at the time of the calculation of the contrastive discrimination loss. For example, $\tau$ is 0.05. The parameter $\tau$ may be any value, and is not limited to the example in this embodiment.

[Equation 2]

$$C(f^{T}, f^{+}, f^{-}) = -\log \frac{exp(f^{T}f^{+}/\tau)}{exp(f^{T}f^{+}/\tau) + exp(f^{T}f^{-}/\tau)}$$

The calculation expression of the contrastive discrimination loss is not limited to Equation 2. For example, such learning that a certain anchor discrimination image and another anchor discrimination image become distant from each other is not required to be executed. Moreover, for example, a mathematical expression without the temperature parameter $\tau$ may be used. The calculation expression of the contrastive discrimination loss may be another calculation expression used for the method for the triplet margin loss. In addition, the discriminator learning module 103 may calculate a batchwise discrimination loss relating to an average of the contrastive discrimination losses each calculated for one of the plurality of anchor discrimination images. The batchwise discrimination loss is a loss reflecting a batch size of the discrimination image (the number of images used in learning).

In this embodiment, the discriminator learning module 103 causes the discriminator to estimate the authenticity of the anchor discrimination image and the authenticity of the generated image generated by the generator, and executes the learning of the discriminator based further on the estimation result of the authenticity of the anchor discrimination image and the estimation result of the authenticity of the generated image generated by the generator. The discriminator learning module 103 executes the learning of the discriminator such that a probability that the anchor discrimination image is estimated to be real increases and a probability that the generated image generated by the generator is estimated to be fake increases.

For example, the discriminator learning module 103 calculates an adversarial discrimination loss based on Equation 3. The adversarial discrimination loss is an adversarial loss used for the learning of the discriminator. The discriminator learning module 103 executes the learning of the discriminator based on the adversarial discrimination loss. The discriminator learning module 103 executes the learning of the discriminator such that the adversarial discrimination loss decreases. In Equation 3, the symbol D() represents the estimation result of the authenticity (for example, real is 0 and fake is 1) obtained by the discriminator. For example, the symbol D(x) represents the estimation result of the anchor discrimination image obtained by the discriminator. The symbol G(z) represents the generated image generated by the generator. The symbol D(G(z)) represents the estimation result of the generated image obtained by the discriminator. The blackboard bold symbol E represents an expected value. The symbol $p_{data}$ and $p_{z}$ represent distributions of the discrimination image and the latent code, respectively. The symbol "z" is the latent code. For example, the latent code is random noise which follows a Gaussian distribution. An average and a variance of the Gaussian distribution may have any values, for example, the average is 0 and the variance is 1.

[Equation 3]

$$\mathcal{L}_{adv}^{D} = \mathop{\mathbb{E}}_{\mathbf{x} \sim p_{data}(\mathbf{x})} \left[ \log D(\mathbf{x}) \right] + \mathop{\mathbb{E}}_{\mathbf{z} \sim p_{\mathbf{z}}(\mathbf{z})} \left[ \log(1 - D(G(\mathbf{z}))) \right]$$

The calculation expression of the adversarial discrimination loss is not limited to Equation 3. The adversarial discrimination loss is only required to be a loss for such learning that the generator and the discriminator are adversarial to each other. For example, the adversarial discrimination loss may be multiplied by a coefficient corresponding to the batch size. The calculation expression of the adversarial discrimination loss may be another calculation expression employed in the publicly-known GAN. The adversarial discrimination loss is not required to be used for the learning of the generator.

In this embodiment, the discriminator learning module 103 causes the discriminator to estimate the authenticity of each of the plurality of anchor discrimination images, executes normalization relating to the estimation result of the authenticity of each of the plurality of anchor discrimination images, and executes the learning of the discriminator based further on an execution result of the normalization. In this embodiment, a case in which the R1 normalization is executed is taken as an example, but, as the normalization itself, one of publicly-known various methods can be used. Other normalization, for example, the R2 normalization or elastic net regularization may be executed. For example, the discriminator learning module 103 calculates a normalization discrimination loss based on Equation 4. The discriminator learning module 103 executes the learning of the discriminator based on the normalization discrimination loss. The discriminator learning module 103 executes the learning of the discriminator such that the normalization discrimination loss decreases.

[Equation 4]

$$\mathcal{L}_{R_1}^D = \|\nabla D(\mathbf{x})\|^2$$

In this embodiment, the discriminator learning module 103 calculates a final loss based on Equation 5. The discriminator learning module 103 executes the learning of the discriminator based on the final loss. The discriminator learning module 103 executes the learning of the discriminator such that the final loss decreases. The symbols $\lambda_{cl}$ and $\lambda_{R1}$ of Equation 5 are hyperparameters. The hyperparameters are determined in accordance with the relative importance of each of the losses. For example, $\lambda_{cl}$ may be 0.05, and $\lambda_{R1}$ may be 10. As described above, a coefficient of the contrastive discrimination loss may be made smaller than a coefficient of the adversarial discrimination loss. Further, a coefficient of the normalization discrimination loss may be made larger than a coefficient of the contrastive discrimination loss.

[Equation 5]

$$L^D = L_{adv}^D + \lambda_{cl} L_{cl}^D + \lambda_{R1} L_{R_1}^D$$

[3-2. Functions for Learning of Generator]

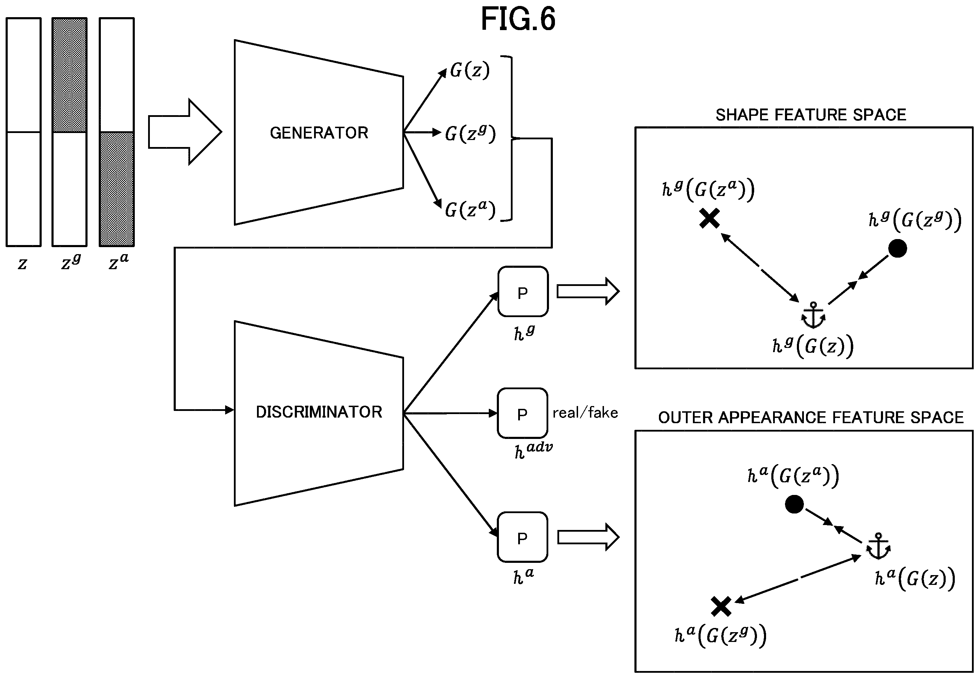

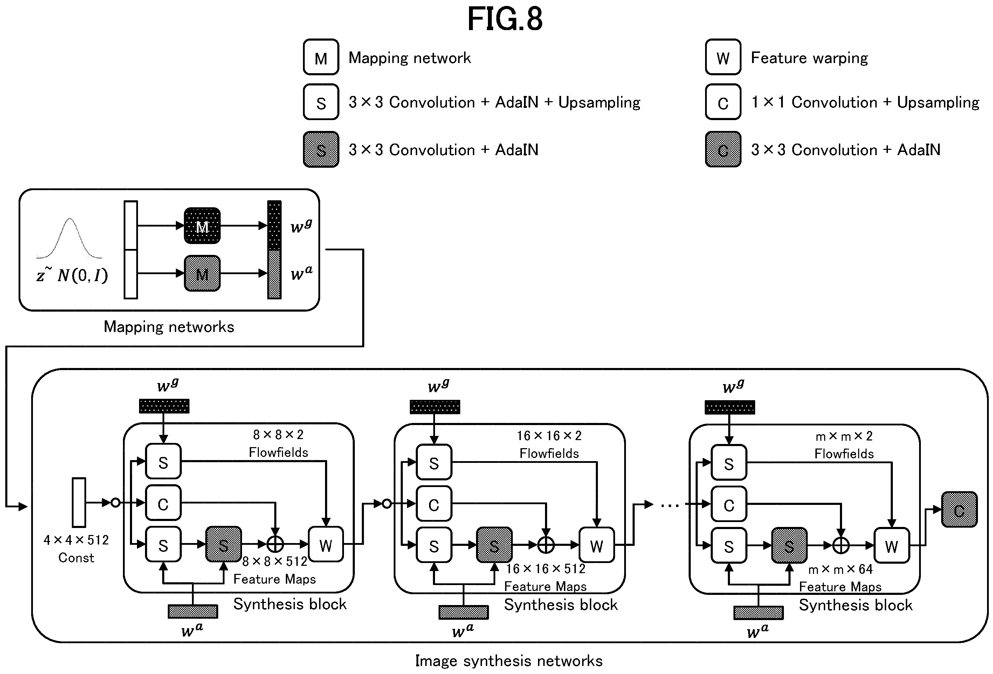

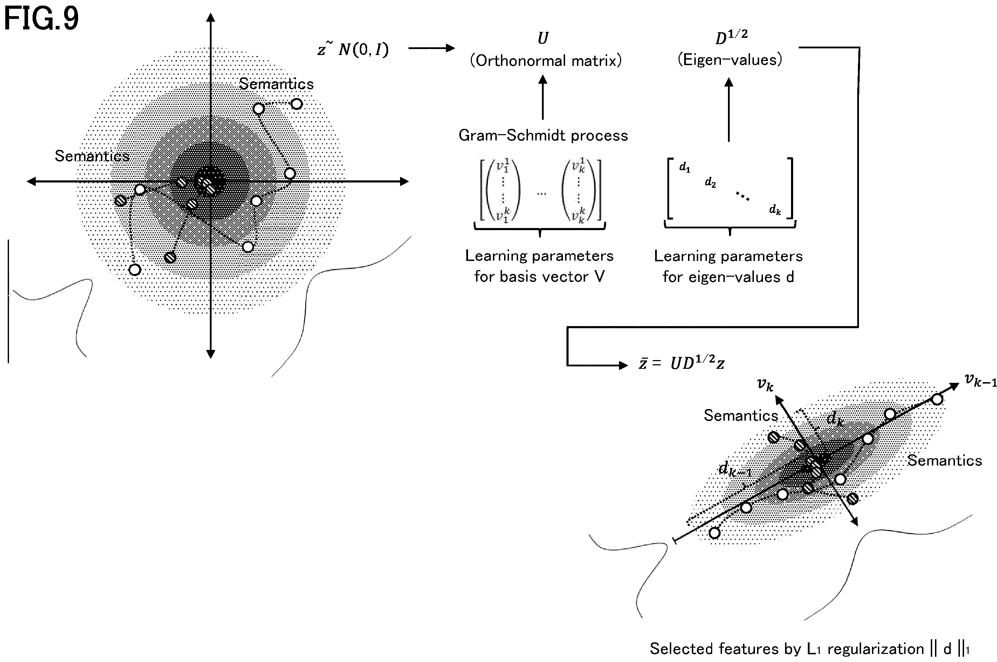

FIG. 6, FIG. 8, and FIG. 9 are diagrams for illustrating examples of the functions for the learning of the generator. While using the diagram of FIG. 3 for illustrating the functions of the learning terminal 10, with reference to FIG. 6, FIG. 8, and FIG. 9, the functions for the learning of the generator are described. In this embodiment, as examples of the learning of the generator, two learning methods which are a learning method using the metric learning and a learning method using the spectral normalization are described. FIG. 6 is an illustration of an example of the learning method using the metric learning. FIG. 8 and FIG. 9 are illustrations of an example of the learning method using the spectral normalization.

As illustrated in FIG. 3, for example, the learning terminal 10 includes, as the functions for the learning of the generator, the data storage unit 100, a latent code acquisition module 104, a generated image generation module 105, a generator learning module 106, and a portion code acquisition module 107. The data storage unit 100 is implemented by the storage unit 12. Each of the latent code acquisition module 104, the generated image generation module 105, the generator learning module 106, and the portion code acquisition module 107 is implemented by the control unit 11. With those functions, the learning system 1 executes the learning of the generator of the GAN which allows the user to control the plurality of features relating to the generated image.

[Data Storage Unit]

The data storage unit 100 stores data required for the learning of the generator. For example, the data storage unit 100 stores actual data on the generator included in the actual data on the GAN and a generated image database DB2. The actual data on the generator indicates a program of the generator and the parameters of the generator. The parameters of the generator are referred to by the program of the generator. The parameters of the generator are adjusted by the generator learning module 106. For example, the parameters of the generator are weighting coefficients and biases. The parameters of the generator may be publicly-known parameters. For example, the parameters of the generator may be the number of hidden layers, the number of units of the hidden layers, or other hyperparameters.

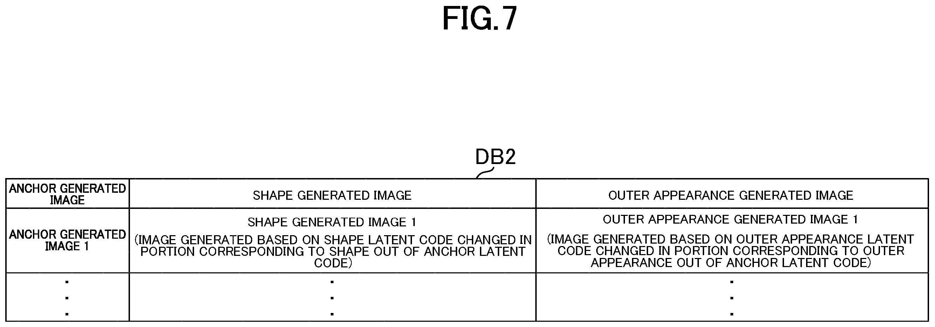

FIG. 7 is a table for showing an example of the generated image database DB2. The generated image database DB2 is a database which stores generated images being images for the learning of the generator. In this embodiment, three generated images which are an anchor generated image, a shape generated image, and an outer appearance generated image are used for the learning of the generator. When the anchor generated image, the shape generated image, and the outer appearance generated image are not distinguished from one another, each thereof is hereinafter simply referred to as "generated image." The generated image can be considered as a training image used as training data for the generator. In the generated image database DB2, the generated image generated by the generated image generation module 105 is stored. The learning terminal 10 can acquire the generated image stored in the generated image database DB2 at any time.

For example, in the generated image database DB2, image data on each of the anchor generated image, the shape generated image, and the outer appearance generated image is stored. In the generated image database DB2, any data may be stored. The data stored in the generated image database DB2 is not limited to the example of FIG. 7. For example, in the generated image database DB2, information on a feature a portion of the latent code corresponding to which has been changed to generate the shape discrimination image and the outer appearance discrimination image may be stored.

The anchor generated image is a generated image generated based on the latent code indicating the feature controllable by the user. When it is required to represent each anchor generated image as a mathematical expression, the anchor generated image is hereinafter described as G(z). The symbol "z" is the latent code input to the generator. The latent code for generating the anchor generated image is hereinafter referred to as "anchor latent code." In the example of FIG. 6, in this embodiment, the anchor latent code is divided into portions corresponding to individual features. Each individual portion corresponds to the feature controllable by the user. In this embodiment, two features which are the shape and the outer appearance are controlled, and hence the anchor latent code is divided into two. For example, of all dimensions of the anchor latent code, the dimensions in the first half correspond to the shape, and those in the remaining half correspond to the outer appearance.

The shape generated image is an image generated based on a latent code changed in a portion corresponding to the shape out of the anchor latent code. This latent code is hereinafter referred to as "shape latent code." In this embodiment, a case in which the shape generated image is an image generated based on the shape latent code changed in a portion corresponding to any one of the plurality of features controllable by the user out of the anchor latent code and is taken as an example, but the shape generated image may be an image generated based on the shape latent code changed in a portion corresponding to each of the plurality of features out of the anchor latent code. When it is required to express each shape latent code as a mathematical expression, the shape latent code is hereinafter described as $z^g$. When it is required to express each shape generated image as a mathematical expression, the shape generated image is hereinafter described as $G(z^g)$.

In this embodiment, the shape generated image is used as a positive generated image in the feature space corresponding to the shape. The positive generated image is a generated image having a feature similar to that of the anchor generated image. Meanwhile, the outer appearance generated image is used as a negative generated image in the feature space corresponding to the shape. The negative generated image is a generated image having a feature different from that of the anchor generated image.

The outer appearance generated image is an image generated based on a latent code changed in a portion corresponding to the outer appearance out of the anchor latent code. This latent code is hereinafter referred to as "outer appearance latent code." In this embodiment, a case in which the outer appearance generated image is an image generated based on the outer appearance latent code changed in a portion corresponding to any one of the plurality of features controllable by the user out of the anchor latent code is taken as an example, but the outer appearance generated image may be an image generated based on the outer appearance latent code changed in a portion corresponding to each of the plurality of features out of the anchor latent code. When it is required to express each outer appearance latent code as a mathematical expression, the outer appearance latent code is hereinafter described as $z^a$. When it is required to express each outer appearance generated image as a mathematical expression, the outer appearance generated image is hereinafter described as $G(z^a)$. In this embodiment, the outer appearance generated image is used as the positive generated image in the feature space corresponding to the outer appearance. Meanwhile, the shape generated image is used as the negative generated image in the feature space corresponding to the outer appearance.

The data stored in the data storage unit 100 is not limited to the above-mentioned example. The data storage unit 100 may store any data. For example, the data storage unit 100 may store a generator learning program indicating a series of processing steps in the learning of the generator. In the generator learning program, a program code which indicates each of a part of the processing of the discriminator learning module 103, the processing of the latent code acquisition module 104, the processing of the generated image generation module 105, the processing of the generator learning module 106, and the processing of the portion code acquisition module 107 is indicated. For example, the data storage unit 100 stores a program for changing the latent code.

[Latent Code Acquisition Module]

The latent code acquisition module 104 acquires the latent code. For example, the latent code acquisition module 104 acquires randomly generated noise as the latent code. A method of randomly generating noise may be a publicly-known method. For example, the latent code acquisition module 104 may acquire the latent code based on a probability distribution (for example, Gaussian distribution). The probability distribution may be a normal distribution, or is not required to be a normal distribution. It is assumed that data on the probability distribution is stored in advance in the data storage unit 100. The latent code acquisition module 104 may acquire the latent code based on a program that generates random numbers instead of the probability distribution.

For example, the latent code acquisition module 104 acquires: the anchor latent code; and a plurality of feature latent codes respectively corresponding to the plurality of features and having been changed in portions corresponding to the features out of the anchor latent code. In this embodiment, two features which are the shape and the outer appearance are used, and hence the shape latent code and the outer appearance latent code are acquired. Each of the shape latent code and the outer appearance latent code as used herein can be read as the feature latent code. Whether each of the shape latent code and the outer appearance latent code is to be acquired as a positive latent code or acquired as a negative latent code depends on which feature space is to be used for the learning of the generator.

For example, the latent code acquisition module 104 acquires the anchor latent code based on the random noise. The latent code acquisition module 104 may acquire the anchor latent code based on a predetermined probability distribution. The latent code acquisition module 104 acquires the shape latent code by changing a portion corresponding to the shape out of the anchor latent code. In the example of FIG. 6, the latent code acquisition module 104 acquires the shape latent code by changing elements of the first-half dimensions (for example, a first dimension to a 50th dimension when the anchor latent code has 100 dimensions) out of the anchor latent code.

For example, the latent code acquisition module 104 acquires the outer appearance latent code by changing a portion corresponding to the outer appearance out of the anchor latent code. In the example of FIG. 6, the latent code acquisition module 104 acquires the outer appearance latent code by changing elements of the second-half dimensions (for example, a 51st dimension to a 100th dimension when the anchor latent code has 100 dimensions) out of the anchor latent code. The numbers of dimensions of those features are not required to be the same as each other. For example, when the anchor latent code has 100 dimensions, the portion corresponding to the shape may have 40 dimensions, and the portion corresponding to the outer appearance may have 60 dimensions.

For example, when the feature space corresponding to the shape is used for the learning of the generator, the latent code acquisition module 104 acquires, as the positive latent code, the shape latent code changed in the portion corresponding to the shape out of the anchor latent code. The latent code acquisition module 104 acquires, as the negative latent code, the outer appearance latent code changed in the portion corresponding to the outer appearance out of the anchor latent code.

For example, when the feature space corresponding to the outer appearance is used for the learning of the generator, the latent code acquisition module 104 acquires, as the positive latent code, the outer appearance latent code changed in the portion corresponding to the outer appearance out of the anchor latent code. The latent code acquisition module 104 acquires, as the negative latent code, the shape latent code changed in the portion corresponding to the shape out of the anchor latent code.

In this embodiment, the case in which the latent code acquisition module 104 generates the positive latent code and the negative latent code has been taken as an example, but the positive latent code and the negative latent code may be generated by another computer other than the learning terminal 10. In the generated image database DB2, the positive latent code and the negative latent code generated by the other computer may be stored. In this case, the learning terminal 10 is not required to have the function of generating the positive latent code and the negative latent code.

[Generated Image Generation Module]

The generated image generation module 105 causes the generator to generate the generated image based on the latent code. In the learning method using the metric learning, at least a part of the generator may be similar to a publicly-known architecture, but the learning method using the metric learning in this embodiment employs a novel configuration. An architecture of the generator in the learning method using the spectral normalization illustrated in FIG. 8 is a novel configuration which has not hitherto been seen. Now, the learning method using the metric learning is described, and then the learning method using the spectral normalization is described.

For example, the generated image generation module 105 generates the anchor generated image based on the anchor latent code and the generator. The generated image generation module 105 generates a plurality of feature generated images based on each of the plurality of feature latent codes and the generator. Whether each of the plurality of feature generated images is to be used as the positive generated image or used as the negative generated image depends on which feature space is to be used for the learning of the generator. The positive generated image is an image generated based on the positive latent code. The negative generated image is an image generated based on the negative latent code.

In this embodiment, in addition to the anchor generated image, the shape generated image and the outer appearance generated image are generated. Each of the shape generated image and the outer appearance generated image is an example of the feature generated image. Thus, each of the shape generated image and the outer appearance generated image as used herein can be read as the feature generated image. Whether each of the shape generated image

and the outer appearance generated image is to be acquired as the positive generated image or acquired as the negative generated image depends on which feature space is to be used for the learning of the generator. In the example of FIG. 6, the anchor generated image is denoted by a symbol of G(z). The shape generated image is denoted by a symbol of G(z^g). The outer appearance generated image is denoted by a symbol of G(z^a).

For example, the generated image generation module 105 inputs the anchor latent code to the generator being trained. The generator transforms, based on the mapping network, the anchor latent code into an intermediate anchor latent code as required. This transformation is not required to be executed. The generator executes processing such as convolution on the anchor latent code, and outputs an image corresponding to a result of this processing as the anchor generated image. This series of processing steps may be similar to internal processing of the generator of the publicly-known GAN. The generated image generation module 105 stores the anchor generated image in the generated image database DB2.

For example, the generated image generation module 105 inputs the shape latent code to the generator being trained. The generator transforms, based on the mapping network, the shape latent code into an intermediate shape latent code as required. This transformation is not required to be executed. The generator executes processing such as convolution on the shape latent code, and outputs an image corresponding to a result of this processing as the shape generated image. The generated image generation module 105 stores the shape generated image in the generated image database DB2.

For example, the generated image generation module 105 inputs the outer appearance latent code to the generator being trained. The generator transforms, based on the mapping network, the outer appearance latent code into an intermediate outer appearance latent code as required. This transformation is not required to be executed. The generator executes processing such as convolution on the outer appearance latent code, and outputs an image corresponding to a result of this processing as the outer appearance generated image. The generated image generation module 105 stores the outer appearance generated image in the generated image database DB2.

[Generator Learning Module]

The generator learning module 106 executes the learning of the generator based on a trained discriminator and the generated image generated by the generated image generation module 105. In this embodiment, the generator learning module 106 executes the learning based on the discriminator that has been trained by the discriminator learning module 103. The generator learning module 106 may execute the learning of the generator based on a discriminator that has completed the learning using a method different from the method described for the discriminator learning module 103.

For example, the generator learning module 106 causes the discriminator to estimate the authenticity of the anchor generated image, and executes the learning of the generator based further on an estimation result of the authenticity of the anchor generated image. For example, the generator learning module 106 executes the learning of the generator based further on an estimation result of the authenticity of each of a plurality of anchor generated images. The generator learning module 106 calculates an adversarial generation loss based on Equation 6. The adversarial generation loss is an adversarial loss used for the learning of the generator. The generator learning module 106 executes the learning of the generator based on the adversarial generation loss. The generator learning module 106 executes the learning of the generator such that the adversarial generation loss decreases. Meanings of the symbols included on the right-hand side of Equation 6 are as described above. The generator learning module 106 executes the learning of the generator based on the adversarial generation loss so that the generator generates generated images that fool the discriminator.

[Equation 6]

$$\mathcal{L}_{adv}^{G} = \underset{\mathbf{z} \sim p_{\mathbf{z}}(\mathbf{z})}{\mathbb{E}} \left[ \log D(G(\mathbf{z})) \right]$$

The calculation expression of the adversarial generation loss is not limited to Equation 6. The adversarial generation loss is only required to be a loss for such learning that the generator and the discriminator are adversarial to each other. For example, the adversarial generation loss may be calculated so as to reflect a batch size of the generated images. The calculation expression of the adversarial generation loss may be another calculation expression employed in the publicly-known GAN. The adversarial generation loss is not required to be used for the learning of the generator.

For example, the generator learning module 106 calculates, for each feature space corresponding to each of the plurality of features, based on the discriminator, an anchor generation vector relating to the anchor generated image, a positive generation vector relating to the feature generated image corresponding to this feature, and a negative generation vector relating to the feature generated image corresponding to another feature. The generator learning module 106 executes the learning such that, in the feature space corresponding to each of the plurality of features, the anchor generation vector and the positive generation vector approach each other, and the anchor generation vector and the negative generation vector become distant from each other. In other words, the generator learning module 106 executes the learning of the generator such that, in the feature space corresponding to each of the plurality of features, the anchor generation vector and the positive generation vector belong to the same cluster, and the anchor generation vector and the negative generation vector do not belong to the same cluster.

An algorithm itself for the learning may be a publicly-known algorithm used for the metric learning. For example, for the learning of the generator, an algorithm such as the gradient descent method, the gradient penalty method, the stochastic gradient flow method, or the variational inference method may be used. In this embodiment, a mutual relationship among three generated images is used for the learning, and hence the generator learning module 106 executes, based on a loss function of the triplet margin loss, the learning of the generator such that the anchor generation vector and the positive generation vector approach each other, and the anchor generation vector and the negative generation vector become distant from each other. The loss function as described in this embodiment is an example of a loss function of the triplet margin loss.

For example, the generator learning module 106 adjusts, in the feature space corresponding to each of the plurality of features, the parameters of the generator such that the anchor generation vector and the positive generation vector approach each other, and the anchor generation vector and the negative generation vector become distant from each other, to thereby execute the learning of the generator. The generator learning module 106 calculates, based on the loss function in the metric learning, in the feature space corresponding to each of the plurality of features, a loss indicating closeness between the anchor generation vector and the positive generation vector and farness between the anchor generation vector and the negative generation vector, and adjusts the parameters of the generator such that this loss decreases.

The feature vector calculated based on the shape generated image is hereinafter referred to as "shape generation vector," and the feature vector calculated based on the outer appearance generated image is hereinafter referred to as "outer appearance generation vector." Each of the shape generation vector and the outer appearance generation vector is an example of a feature generation vector being a feature vector calculated based on the feature generated image. Thus, each of the shape generation vector and the outer appearance generation vector as used herein can be read as the feature generation vector. Whether each of the shape generation vector and the outer appearance generation vector is to be acquired as the positive generation vector or acquired as the negative generation vector depends on which feature space is to be used for the learning of the generator.

For example, in the shape feature space corresponding to the shape, the shape generated image is the positive generated image, and the outer appearance generated image is the negative generated image. Thus, the generator learning module 106 calculates the shape generation vector (denoted by a symbol of $h^g(G(z^g))$ in FIG. 6) as the positive generation vector of the shape based on the shape generated image and the projection head of the shape. The generator learning module 106 calculates the outer appearance generation vector (denoted by a symbol of $h^g(G(z^a))$ in FIG. 6) as the negative generation vector of the shape based on the outer appearance generated image and the projection head of the shape.

For example, the generator learning module 106 calculates the anchor generation vector (denoted by a symbol of $h^g(G(z))$ in FIG. 6) of the shape based on the anchor generated image and the projection head of the shape. The generator learning module 106 executes the learning of the generator such that, in the shape feature space corresponding to the shape, the anchor generation vector of the shape and the shape generation vector approach each other, and the anchor generation vector of the shape and the outer appearance generation vector become distant from each other.

For example, in the outer appearance feature space corresponding to the outer appearance, the outer appearance generated image is the positive generated image, and the shape generated image is the negative generated image. Thus, the generator learning module 106 calculates the outer appearance generation vector (denoted by a symbol of $h^a(G(z^a))$ in FIG. 6) as the positive generation vector of the outer appearance based on the outer appearance generated image and the projection head of the outer appearance. The generator learning module 106 calculates the shape generation vector (denoted by a symbol of $h^a(G(z^g))$ in FIG. 6) as the negative generation vector of the outer appearance based on the shape generated image and the projection head of the outer appearance.

For example, the generator learning module 106 calculates the anchor generation vector (denoted by a symbol of $h^a(G(z))$ in FIG. 6) of the outer appearance based on the anchor generated image and the projection head of the outer appearance. The generator learning module 106 executes the learning of the generator such that, in the outer appearance feature space corresponding to the outer appearance, the anchor generation vector of the outer appearance and the outer appearance generation vector approach each other, and the anchor generation vector of the outer appearance and the shape generation vector become distant from each other.

In this embodiment, the generator learning module 106 calculates, for each anchor generated image, a contrastive generation loss relating to the closeness between the anchor generation vector of this anchor generated image and the positive generation vector of the positive generated image of this anchor generated image and the closeness between the anchor generation vector of this anchor generated image and the negative generation vector of the negative generated image of this anchor generated image. The generator learning module 106 executes the learning of the generator based on the contrastive generation loss. The generator learning module 106 executes the learning of the generator such that the contrastive generation loss decreases.

The contrastive generation loss is a contrastive loss calculated based on the generated image. The concept of the contrastive generation loss is roughly the same as that of the contrastive discrimination loss. In this embodiment, the generator learning module 106 calculates the contrastive generation loss based on Equation 7. Equation 7 is an example of an expression for evaluating each of a difference between the anchor generated image and the positive generated image and a difference between the anchor generated image and the negative generated image. Meanings of the symbols on the right-hand side of Equation 7 are as described above.

[Equation 7]

$$\mathcal{L}_{cl}^{G} = C(h^{g}(G(\mathbf{z})), h^{g}(G(\mathbf{z}^{g})), h^{g}(G(\mathbf{z}^{a}))) + C(h^{a}(G(\mathbf{z})), h^{a}(G(\mathbf{z}^{a})), h^{a}(G(\mathbf{z}^{g})))$$

The above-mentioned learning method of the generator is an example of the learning method using the metric learning. Now, the learning method using the spectral normalization is described with reference to FIG. 8 and FIG. 9. The learning terminal 10 may execute the learning of the generator by combining the learning method using the metric learning and the learning method using the spectral normalization, or may execute the learning of the generator by only any one of the learning method using the metric learning or the learning method using the spectral normalization. First, for the sake of simplification of description, the learning method using the spectral normalization is described without assuming the learning method using the metric learning.

When the metric learning is not used, the latent code acquisition module 104 does not acquire the positive latent code and the negative latent code. In FIG. 6, the anchor latent code is denoted by the symbol of "z", but when the latent code acquisition module 104 does not acquire the positive latent code and the negative latent code, it is not required to distinguish the latent codes from each other, and hence what is denoted by the symbol "z" is simply referred to as "latent code." A method of acquiring the latent code by the latent code acquisition module 104 is as described above. For example, the latent code acquisition module 104 may acquire the latent code "z" based on a Gaussian distribution N(0, I). The symbol I may be any numerical value (for example, 1).

[Portion Code Acquisition Module]

The portion code acquisition module 107 acquires a plurality of portion codes respectively corresponding to the plurality of features based on the latent code for generating the generated image and a plurality of mapping networks respectively corresponding to the plurality of features. The portion code is a portion of the latent code. The portion code acquisition module 107 acquires the plurality of portion codes by dividing the latent code into portions corresponding to the respective plurality of features and then inputting those respective portions of the plurality of features into the mapping networks corresponding to those features so that the portions are transformed. In this embodiment, two features which are the shape and the outer appearance are used, and hence the portion code acquisition module 107 acquires a portion code corresponding to the shape and a portion code corresponding to the outer appearance based on the latent code, a mapping network corresponding to the shape, and a mapping network corresponding to the outer appearance.

The mapping network is a program for transforming the latent code. The mapping network transforms the latent code into a more meaningful intermediate representation. For example, the mapping network transforms the latent code by a plurality of fully connected layers. The transformed latent code is the portion code. The mapping network is used in an architecture such as StyleGAN. While related-art GANs generate a generated image directly from each latent code, the mapping network improves processing for generating the generated image. The transformation by the mapping network facilitates control of a certain feature. For example, the mapping network may be a neural network having a plurality of layers (for example, eight layers).

In the example of FIG. 8, an example of the architecture of the generator is illustrated. For example, the generator includes the mapping network corresponding to the shape and the mapping network corresponding to the outer appearance. The generator includes as many mapping networks as the number of features controllable by the user. For example, when three or more features are controllable by the user, the generator includes three or more mapping networks. The initially acquired latent code "z" follows the Gaussian distribution N(0, I). The portion code acquisition module 107 divides the latent code "z" into the same number as the number of features controllable by the user, and then inputs individual portions obtained through division into the mapping networks.

For example, the portion code acquisition module 107 acquires a portion of the latent code "z" (in the example of FIG. 8, the portion in the first half of all the dimensions; for example, the portion of the first dimension to the 50th dimension when the latent code "z" has 100 dimensions) as a shape portion code being the portion code corresponding to the shape. The portion code acquisition module 107 inputs the shape portion code to the mapping network corresponding to the shape, and acquires a final shape portion code (in FIG. 8, $w^g$). As described later, the shape portion code may be transformed by a covariance matrix and then input to the mapping network corresponding to the shape.

For example, the portion code acquisition module 107 acquires the remaining portion of the latent code "z" (in the example of FIG. 8, the second half of all the dimensions; for example, the portion of the 51st dimension to the 100th dimension when the latent code "z" has 100 dimensions) as an outer appearance portion code being the portion code corresponding to the outer appearance. The portion code acquisition module 107 inputs the outer appearance portion code to the mapping network corresponding to the outer appearance, and acquires a final outer appearance portion code (in FIG. 8, $w^a$). As described later, the outer appearance portion code may be transformed by a covariance matrix and then input to the mapping network corresponding to the outer appearance.

In this embodiment, a case in which the portion code acquisition module 107 acquires a first latent code based on a predetermined probability distribution and transforms the first latent code into a second latent code based on a parameter adjustable by the learning is taken as an example. FIG. 9 is an illustration of an example of processing for transforming the first latent code into the second latent code. The portion code acquisition module 107 transforming the first latent code into the second latent code as illustrated in FIG. 9 corresponds to the portion code acquisition module 107 acquiring the second latent code which follows a Gaussian distribution $N(0, \Sigma)$. The symbol $\Sigma$ is a learnable covariance matrix. The learnable covariance matrix is one of the parameters of the generator.

In this embodiment, a case in which the learnable covariance matrix is decomposed into $\Sigma = UDU^T$ by eigen-decomposition is taken as an example. The symbol U is a matrix in which eigen-vectors of the covariance matrix are arranged as column vectors. For example, the symbol U may include an orthonormal vector. The symbol D is a diagonal matrix with the eigen-values of $\Sigma$ set as diagonal components. The symbol $U^T$ is a matrix in which rows and columns of U are swapped (matrix in which U is transposed). The eigen-decomposition of the learnable covariance matrix may be performed by publicly-known processing, and an expression for the eigen-decomposition is not limited to the above-mentioned example. For example, the eigen-decomposition may be performed by an inverse matrix instead of the transposition of U.

For example, as learnable parameters of the generator, basis vectors and lengths in each axis of a vector space are denoted as $V=\{v_1, ..., v_k\}$. Further, $v_k=\{v_k^1, ..., v_k^k\}$, and $d=\{d_1, ..., d_k\}$. Those can also be said to be parameters in the first layer of the mapping network. Those parameters are transformed into a square matrix in which the number of rows and the number of columns are equal and a diagonal matrix in which all off-diagonal elements are zero. The parameters after the transformation are expressed by Equations 8 and 9. The blackboard bold symbol R in Equations 8 and 9 represents a set of real numbers.

$$[\text{Equation 8}]$$

$$\mathbf{V} \in \mathbb{R}^{k \times k}$$

$$[\text{Equation 9}]$$

$$\mathbf{D}^{1/2} \in \mathbb{R}^{k \times k}$$

The second latent code acquired by the Gaussian distribution $N(0, \Sigma)$ is hereinafter referred to as "z(bar)." In the present application, a bar cannot be placed over a symbol due to formatting limitations, and hence the "(bar)" in "z(bar)" is schematically written to represent a bar placed above the symbol. As illustrated in FIG. 9, the portion code acquisition module 107 transforms the first latent code "z" into the second latent code z (bar) by the calculation expression z(bar) $=UD^{1/2}z$. The symbol $D^{1/2}$ is a square root matrix of the diagonal matrix D. The portion code acquisition module 107 acquires the second latent code z(bar) by multiplying the column vector U, the square root matrix $D^{1/2}$ of the diagonal matrix D, and the first latent code "z" acquired from a Gaussian distribution $Z(0, I)$ in the stated order.

For example, the portion code acquisition module 107 acquires the plurality of portion codes based on the second latent code and the plurality of mapping networks. A portion of the second latent code z(bar) (for example, the portion in the first half of all the dimensions; the portion of the first dimension to the 50th dimension when the second latent code z(bar) has 100 dimensions) may be acquired as the shape portion code. The portion code acquisition module 107 may input the above-mentioned portion of the second latent code z(bar) to the mapping network corresponding to the shape, and acquire the portion code output from this mapping network as the shape portion code.

For example, the portion code acquisition module 107 may acquire the remaining portion of the second latent code z(bar) (for example, the second half of all the dimensions; the portion of the 51st dimension to the 100th dimension when the second latent code z(bar) has 100 dimensions) as the outer appearance portion code. The portion code acquisition module 107 may input the remaining portion of the second latent code z(bar) to the mapping network corresponding to the outer appearance, and acquire the portion code output from this mapping network as the outer appearance portion code.

As described above, the parameters of the generator may be the learnable covariance matrix. The portion code acquisition module 107 transforms the first latent code (in FIG. 9, "z") into the second latent code (in FIG. 9, z(bar)) based on the learnable covariance matrix. For example, the predetermined probability distribution may be an isotropic Gaussian distribution (in FIG. 9, N(0, I)). The isotropic Gaussian distribution is a Gaussian distribution in which the distribution is uniform in all directions as illustrated in FIG. 9. The portion code acquisition module 107 acquires the first latent code based on the isotropic Gaussian distribution, and transforms the first latent code into the second latent code based on the learnable covariance matrix, to thereby acquire the second latent code following an anisotropic Gaussian distribution. The anisotropic Gaussian distribution is a Gaussian distribution in which the distribution varies depending on the direction, such as the distribution of z(bar) =$UD^{1/2}z$ of FIG. 9.

In this embodiment, the generated image generation module 105 generates the generated image based on image synthesis networks that generate a generated image through use of a plurality of portion codes. FIG. 8 is an illustration of an example of an architecture of the image synthesis networks. The term "4×4×512 Const" at the beginning of the image synthesis networks is a tensor that is initially handled by the generator. In this case, a tensor having a spatial size of 4×4 and 512 channels is taken as an example. The symbol "Const" means that the tensor has fixed values. A case in which the tensor that is initially handled by the generator has fixed values is taken as an example, but as the tensor itself, one of various publicly-known tensors can be used. For example, the tensor may have values that vary randomly instead of having fixed values. The size and number of channels of the tensor may also be any size and number of channels, and are not limited to the example in this embodiment.

For example, the generated image generation module 105 generates the generated image by causing the image synthesis networks to successively repeat convolution and upsampling based on the plurality of portion codes and an initial-state feature map in the generator. In the architecture of FIG. 8, the image synthesis networks include a plurality of synthesis blocks. Each of the plurality of portion codes is input to each individual synthesis block. Each individual synthesis block includes a layer that performs at least one of convolution or upsampling. Through processing of the individual synthesis blocks, the tensor is gradually upsampled to increase in spatial resolution. Finally, a generated image of m×m×64 (where "m" is a freely-selected integer; in the example of FIG. 8, an integer multiple of 4) is generated. The size and number of channels of the generated image may also be any size and number of channels, and are not limited to the example in this embodiment.

In this embodiment, the generator learning module 106 executes the learning of the generator including the plurality of mapping networks and image synthesis networks based on the generated image and the trained discriminator of the GAN. For example, the generator learning module 106 executes the learning based on a spectral loss function indicating that a loss decreases as a distance between vectors relating to a plurality of portion codes becomes smaller. When the learnable covariance matrix is used as a parameter, the generator learning module 106 executes the learning by adjusting values of the learnable covariance matrix based on the spectral loss function.

For example, the spectral loss function is calculated by Equation 10. The symbol $\|d^g\|_1$ on the right-hand side of Equation 10 is an L1 norm (sum of absolute values) of the vector indicated by the shape portion code. The symbol $\|d^a\|_1$ is an L1 norm (sum of absolute values) of the vector indicated by the outer appearance portion code. The generator learning module 106 executes the learning of the generator such that the spectral loss function decreases.

[Equation 10]

$$\mathcal{L}_s^G = \|\mathbf{d}^g\|_1 + \|\mathbf{d}^a\|_1$$

The calculation expression for a spectral loss is not limited to Equation 10. The spectral loss may be calculated by such a function that the loss decreases as the absolute value of each portion code becomes smaller. For example, a coefficient may be set for at least one of $\|d^g\|_1$ or $\|d^a\|_1$. The absolute values of the shape portion code and the outer appearance portion code may be evaluated by a calculation method other than the L1 norm.

As described above, the learning of the generator may be executed by the learning method using the spectral normalization. When the learning method using the metric learning and the learning method using the spectral normalization are combined, the portion code acquisition module 107 may acquire a plurality of anchor portion codes being a plurality of portion codes based on the anchor latent code and a plurality of feature portion codes being a plurality of portion codes based on each of the plurality of feature latent codes. The anchor portion code is the same as the portion code that has already been described.

The feature portion code is different from the anchor portion code in that the feature portion code is acquired based on the feature latent code, but a method of acquiring the feature portion code from the feature latent code is the same as a method of acquiring the anchor portion code from the anchor latent code. For example, the portion code acquisition module 107 acquires each of the plurality of feature latent codes as the first latent code, and transforms each of the plurality of feature latent codes into the second latent code based on the learnable covariance matrix. The portion code acquisition module 107 divides the second latent code transformed from each of the plurality of feature latent codes into respective features, and then inputs the second latent code into the respective plurality of mapping networks, to thereby acquire the plurality of feature portion codes. The portion code acquisition module 107 acquires the plurality of feature portion codes for each feature latent code. For example, the portion code acquisition module 107 acquires the shape portion code and the outer appearance portion code which are the plurality of feature portion codes corresponding to the shape latent code. The portion code acquisition module 107 acquires the shape portion code and the outer appearance portion code which are the plurality of feature portion codes corresponding to the outer appearance latent code.

For example, the generated image generation module 105 acquires: the anchor generated image being a generated image based on the plurality of anchor portion codes; and a plurality of feature generated images respectively corresponding to the plurality of features and each being a generated image based on the plurality of feature portion codes. The anchor generated image is the same as the generated image that has already been described. The feature generated image differs from the anchor generated image in that the feature generated image is acquired based on the plurality of feature portion codes, but a method of acquiring the feature generated image from the plurality of feature portion codes is the same as a method of acquiring the anchor generated image from the plurality of anchor portion codes.

For example, the generated image generation module 105 inputs, for each feature, the respective plurality of feature portion codes corresponding to this feature into the synthesis blocks, and successively repeats the upsampling, to thereby acquire the feature generated image. The generated image generation module 105 inputs the shape portion code and outer appearance portion code acquired from the shape latent code respectively into the synthesis blocks, and successively repeats the upsampling, to thereby acquire the shape generated image. The generated image generation module 105 inputs the shape portion code and outer appearance portion code acquired from the outer appearance latent code respectively into the synthesis blocks, and successively repeats the upsampling, to thereby acquire the outer appearance generated image. The generator learning module 106 may execute the learning based on those generated images.

In this embodiment, the generator learning module 106 calculates a final loss based on Equation 11. The generator learning module 106 executes the learning of the generator based on the final loss. The generator learning module 106 executes the learning of the generator such that the final loss decreases. The symbol $\lambda_{cl}$ of Equation 11 is the hyperparameter. The value of $\lambda_{cl}$ of Equation 11 and the value of $\lambda_{cl}$ of Equation 5 may be the same as each other, or may be different from each other.

$$[\text{Equation 11}]$$

$$L^G = L^G_{adv} + \lambda_{cl} L^G_{cl} + \lambda_s L^G_s$$

[4. Processing Executed in Learning System]

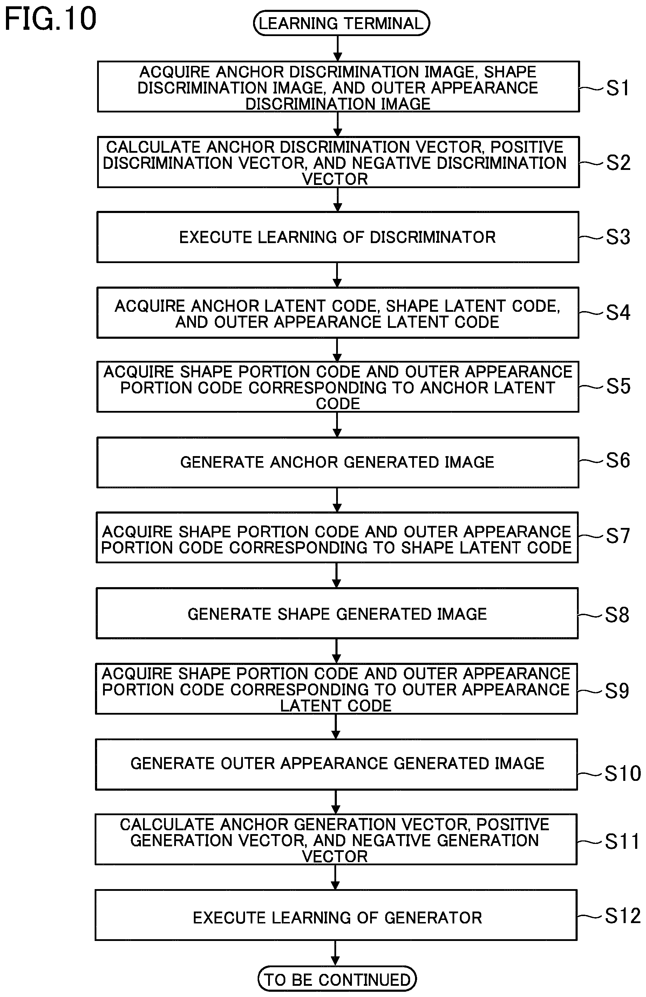

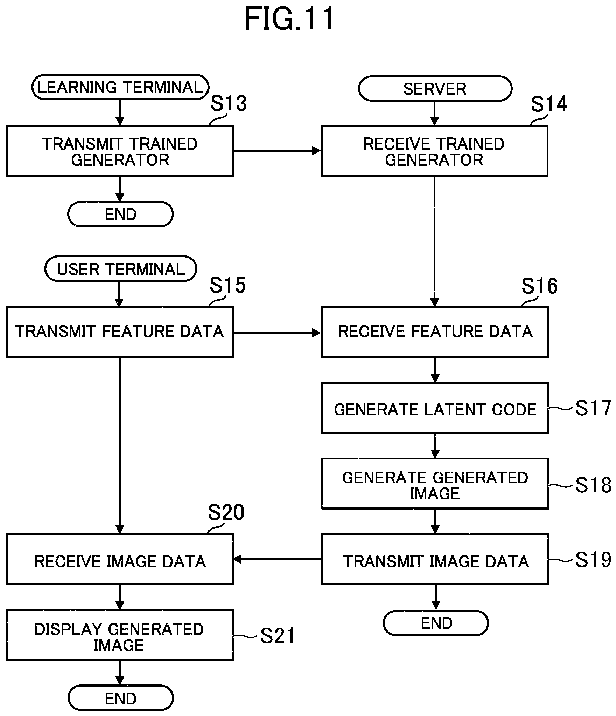

FIG. 10 and FIG. 11 are flowcharts for illustrating an example of processing executed in the learning system 1. The processing of FIG. 10 and FIG. 11 is executed by the control units 11, 21, and 31 executing the programs stored in the storage units 12, 22, and 32, respectively. In FIG. 10 and FIG. 11, processing for the learning of the discriminator, processing for the learning of the generator, and processing for use of the trained generator are illustrated as a series of processing steps, but those pieces of processing may be executed independently.

As illustrated in FIG. 10, the learning terminal 10 acquires the anchor discrimination image, the shape discrimination image, and the outer appearance discrimination image based on the discrimination image database DB1 (Step S1). The learning terminal 10 inputs each of the anchor discrimination image, the shape discrimination image, and the outer appearance discrimination image to the discriminator, and calculates the anchor discrimination vector, the positive discrimination vector, and the negative discrimination vector for each feature space corresponding to each of the plurality of features (Step S2). The learning terminal 10 executes the learning of the discriminator based on execution results of the processing steps of Step S1 and Step S2 (Step S3). In Step S3, the learning terminal 10 calculates the various losses based on Equation 1 to Equation 4. The learning terminal 10 calculates the final loss based on Equation 5. The learning terminal 10 executes the learning of the discriminator such that the final loss decreases. Through the above-mentioned processing, the learning of the discriminator is completed.

The learning terminal 10 acquires the anchor latent code, the shape latent code, and the outer appearance latent code (Step S4). The learning terminal 10 acquires the shape portion code and outer appearance portion code corresponding to the anchor latent code based on the anchor latent code and the mapping networks (Step S5). In Step S5, the learning terminal 10 transforms and divides the anchor latent code based on the learnable covariance matrix, and inputs the transformed codes into the mapping networks corresponding to the respective features, to thereby acquire the shape portion code and the outer appearance portion code as the anchor portion codes. The learning terminal 10 generates the anchor generated image based on the shape portion code and outer appearance portion code acquired from the anchor latent code and the image synthesis networks (Step S6). In Step S6, the learning terminal 10 generates the anchor generated image by inputting the anchor portion codes corresponding to the shape and the outer appearance respectively into the synthesis blocks and successively executing upsampling.

The learning terminal 10 acquires the shape portion code and outer appearance portion code corresponding to the shape latent code based on the shape latent code and the mapping networks (Step S7). In Step S7, the learning terminal 10 transforms and divides the shape latent code based on the learnable covariance matrix, and inputs the transformed codes into the mapping networks corresponding to the respective features, to thereby acquire the shape portion code and the outer appearance portion code. The learning terminal 10 generates the shape generated image based on the shape portion code and outer appearance portion code acquired from the shape latent code and the image synthesis networks (Step S8). In Step S8, the learning terminal 10 generates the shape generated image by inputting the shape portion codes and the outer appearance portion codes respectively into the synthesis blocks and successively executing upsampling.

The learning terminal 10 acquires the shape portion code and outer appearance portion code corresponding to the outer appearance latent code based on the outer appearance latent code and the mapping networks (Step S9). In Step S9, the learning terminal 10 transforms and divides the outer appearance latent code based on the learnable covariance matrix, and inputs the transformed codes into the mapping networks corresponding to the respective features, to thereby acquire the shape portion code and the outer appearance portion code. The learning terminal 10 generates the outer appearance generated image based on the shape portion code and outer appearance portion code acquired from the outer appearance latent code and the image synthesis networks (Step S10). In Step S10, the learning terminal 10 generates the outer appearance generated image by inputting the shape portion codes and the outer appearance portion codes respectively into the synthesis blocks and successively executing upsampling.

The learning terminal 10 inputs each of the anchor generated image, the shape generated image, and the outer appearance generated image to the discriminator, and calculates the anchor generation vector, the positive generation vector, and the negative generation vector for each feature space corresponding to each of the plurality of features (Step S11). The learning terminal 10 executes the learning of the generator based on execution results of the processing steps of from Step S4 to Step S11 (Step S12). In Step S12, the learning terminal 10 calculates the various losses based on Equations 7 to 10. The learning terminal 10 calculates the final loss based on Equation 11. The learning terminal 10 executes the learning of the generator such that the final loss decreases.

With now reference to FIG. 11, the learning terminal 10 transmits the trained generator to the server 20 (Step S13). In Step S13, the learning terminal 10 may transmit the trained discriminator to the server 20 together with the trained generator. When the server 20 receives the trained generator from the learning terminal 10 (Step S14), the server 20 records the trained generator in the storage unit 22. The user terminal 30 transmits feature data indicating a feature specified by the user to the server 20 (Step S15).

When the server 20 receives the feature data from the user terminal 30 (Step S16), the server 20 generates the latent code corresponding to the feature indicated by the feature data (Step S17). The server 20 generates the generated image based on the latent code and the trained generator (Step S18). The server 20 transmits image data indicating the generated image to the user terminal 30 (Step S19). The user terminal 30 receives the image data from the server 20 (Step S20). The user terminal 30 displays, based on the image data, the generated image on the display unit 35 (Step S21), and this processing is finished.

[5. Summary of Embodiment]

The learning system 1 according to this embodiment executes the learning of the generator of the GAN which allows the user to control the plurality of features relating to the generated image. The learning system 1 acquires the plurality of portion codes respectively corresponding to the plurality of features based on the latent code for generating the generated image and the plurality of mapping networks respectively corresponding to the plurality of features. The learning system 1 generates the generated image based on the image synthesis networks that generate the generated image through use of the plurality of portion codes. The learning system 1 executes the learning of the generator based on the generated image and the trained discriminator of the GAN. As a result, the learning system 1 can divide the latent code into finer and more detailed meanings, and hence can increase the accuracy of the GAN. The GAN can easily recognize which portion of the latent code corresponds to which feature through use of each portion code, and hence the learning system 1 can increase the accuracy of the GAN. For example, the GAN can easily recognize that specific dimensions of the latent code correspond to a specific feature through the learning using the portion codes, and hence the learning system 1 can increase the accuracy of a GAN that linearly controls the specific feature of the generated image (GAN that can emphasize or change the specific feature of the generated image). Such a GAN is also sometimes referred to as so-called "LC-GAN." The learning using the portion codes enables the learning system 1 to create such an LC-GAN as to allow the user to intuitively and efficiently manipulate the specific feature of the generated image.

Moreover, the learning system 1 acquires the first latent code based on a predetermined probability distribution. The learning system 1 transforms the first latent code into the second latent code based on a parameter adjustable by the learning. The learning system 1 acquires the plurality of portion codes based on the second latent code and the plurality of mapping networks. The learning system 1 executes the learning based on the spectral loss function indicating that the loss decreases as the distance between vectors relating to the plurality of portion codes becomes smaller. As a result, the learning system 1 can cause the GAN to generate the generated image based on a more appropriate second latent code by transforming the first latent code acquired by the probability distribution into a second latent code appropriate for controlling individual features. Moreover, it becomes easier for the GAN to recognize that specific dimensions in the portion code correspond to a specific feature due to the spectral loss function for focusing on specific dimensions of the portion code, and hence the learning system 1 can further increase the accuracy of the GAN. For example, when certain dimensions of the portion code correspond to a certain feature, values of elements of those dimensions are important for controlling this feature, and values of elements of other dimensions are not so relevant to the control of this feature. In this respect, when the values of the elements of the other dimension are relatively large, the GAN may fail to recognize the dimensions that are important to this feature. In view of this, the learning system 1 can execute the learning of the GAN so that the GAN emphasizes the dimensions corresponding to the feature to be controlled through use of such a spectral loss function that the loss decreases as the distance between vectors relating to the portion codes becomes smaller. For example, the learning system 1 can achieve the learning of the GAN by unsupervised learning by utilizing the spectral normalization technology.

Moreover, the parameter is the learnable covariance matrix. The learning system 1 transforms the first latent code into the second latent code based on the learnable covariance matrix. The learning system 1 executes the learning by adjusting the values of the learnable covariance matrix based on the spectral loss function. As a result, the learning system 1 can control characteristics of the GAN through use of specific values in the covariance matrix, and hence can further increase the accuracy of the GAN. The covariance matrix enables the GAN to more appropriately recognize a structure of the latent code.

Moreover, the predetermined probability distribution is the isotropic Gaussian distribution. The learning system 1 acquires the first latent code based on the isotropic Gaussian distribution. The learning system 1 acquires the second latent code following the anisotropic Gaussian distribution by transforming the first latent code into the second latent code based on the learnable covariance matrix. As a result, the learning system 1 can acquire the portion code based on the second latent code having the distribution biased in a certain direction in the vector space, and hence the GAN can easily recognize that certain specific dimensions correspond to a certain specific feature. As a result, the learning system 1 can further increase the accuracy of the GAN. The GAN can more appropriately recognize the structure of the latent code.

Moreover, the learning system 1 generates the generated image by causing the image synthesis networks to successively repeat the convolution and the upsampling based on the plurality of portion codes and the initial-state feature map in the generator. As a result, the learning system 1 can reflect each individual portion code in the generated image, and hence can generate the generated image reflecting each feature desired by the user.

Moreover, the learning system 1 acquires: the anchor latent code; and the plurality of feature latent codes respectively corresponding to the plurality of features. The learning system 1 acquires the plurality of anchor portion codes and the plurality of feature portion codes based on the respective plurality of feature latent codes. The learning system 1 acquires the anchor generated image based on the plurality of anchor portion codes and the plurality of feature generated images corresponding to the respective plurality of features. The learning system 1 calculates, for each feature space corresponding to each of the plurality of features, based on the discriminator, the anchor generation vector, the positive generation vector relating to the feature generated image corresponding to this feature, and the negative generation vector relating to the feature generated image corresponding to another feature. The learning system 1 executes the learning such that, in the feature space corresponding to each of the plurality of features, the anchor generation vector and the positive generation vector approach each other, and the anchor generation vector and the negative generation vector become distant from each other. As a result, the learning system 1 can further increase the accuracy of the GAN through use of the metric learning technology. The use of the metric learning technology enables the learning system 1 to reduce the number of images to be prepared at the time of the learning, thereby enabling reduction in labor for the learning of the generator.

Moreover, the learning system 1 causes the discriminator to estimate the authenticity of the anchor generated image, and executes the learning of the generator based further on the estimation result of the authenticity of the anchor generated image. As a result, the learning system 1 can achieve the learning reflecting the estimation result of the authenticity of the discriminator, and hence can further reduce the labor for the learning of the GAN. The accuracy of the generator also increases more.

Moreover, the learning system 1 acquires: the anchor discrimination image; and the plurality of feature discrimination images respectively corresponding to the plurality of features. The learning system 1 calculates, for each feature space corresponding to each of the plurality of features, based on the discriminator, the anchor discrimination vector, the positive discrimination vector relating to the feature discrimination image corresponding to this feature, and the negative discrimination vector relating to the feature discrimination image corresponding to another feature. The learning system 1 executes the learning of the discriminator such that, in the feature space corresponding to each of the plurality of features, the anchor discrimination vector and the positive discrimination vector approach each other, and the anchor discrimination vector and the negative discrimination vector become distant from each other. The learning system 1 executes the learning based on the trained discriminator. As a result, the learning system 1 can reduce the labor for the learning of the discriminator. For example, the learning system 1 reduces the labor for the learning of the discriminator without requiring the manual labeling of the discrimination image or the use of a pre-trained classification model. Moreover, the learning system 1 executes, in one go, the preparation of the images to be learned by the discriminator and the learning of the discriminator through use of those images, to thereby achieve efficient learning. The learning system 1 also achieves the increase in accuracy of the discriminator through this learning.

Moreover, the learning system 1 causes the discriminator to estimate the authenticity of the anchor discrimination image and the authenticity of the generated image generated by the generator. The learning system 1 executes the learning of the discriminator based further on the estimation result of the authenticity of the anchor discrimination image and the estimation result of the authenticity of the generated image generated by the generator. As a result, the learning system 1 can achieve the learning reflecting the estimation result of the authenticity of the discriminator, and hence can further reduce the labor for the learning of the GAN. The accuracy of the discriminator also increases more.

Moreover, the learning system 1 causes the discriminator to estimate the authenticity of each of the plurality of anchor discrimination images. The learning system 1 executes the normalization relating to the estimation result of the authenticity of each of the plurality of anchor discrimination images. The learning system 1 executes the learning of the discriminator based further on the execution result of this normalization. As a result, the learning system 1 can achieve the learning reflecting the normalized estimation result of the authenticity obtained by the discriminator, and hence can further reduce the labor for the learning of the GAN. The accuracy of the discriminator also increases more. The learning system 1 can further reduce the labor for the learning of the GAN.

[6. Modification Examples]

The present disclosure is not limited to the above-mentioned embodiment. The present disclosure may appropriately be modified without departing from the purport of the present disclosure.

For example, the processing for the learning of the discriminator and the processing for the learning of the generator may be executed by separate computers. A first learning terminal 10 may execute the processing for the learning of the discriminator and a second learning terminal 10 may execute the processing for the learning of the generator. For example, the processing described as being executed by the learning terminal 10 may be executed by the server 20, the user terminal 30, or another computer. The processing described as being executed by the learning terminal 10 may be distributed to a plurality of computers.

[7. Supplementary Notes]

For example, the learning system may be configured as described below.

(1) A learning system for executing learning of a generator of a generative adversarial network (GAN) which allows a user to control a plurality of features relating to a generated image, the learning system including:

a portion code acquisition module configured to acquire a plurality of portion codes respectively corresponding to the plurality of features based on a latent code for generating the generated image and a plurality of mapping networks respectively corresponding to the plurality of features;
a generated image generation module configured to generate the generated image based on image synthesis networks configured to generate the generated image through use of the plurality of portion codes; and
a generator learning module configured to execute the learning of the generator including the plurality of mapping networks and the image synthesis networks based on the generated image and a trained discriminator of the GAN.

(2) The learning system according to Item (1),

wherein the portion code acquisition module is configured to:

acquire a first latent code based on a predetermined probability distribution;
transform the first latent code into a second latent code based on a parameter adjustable by the learning; and
acquire the plurality of portion codes based on the second latent code and the plurality of mapping networks, and

wherein the generator learning module is configured to execute the learning based on a spectral loss function indicating that a loss decreases as a distance between vectors relating to the plurality of portion codes becomes smaller.

(3) The learning system according to Item (2),

wherein the parameter is a learnable covariance matrix,
wherein the portion code acquisition module is configured to transform the first latent code into the second latent code based on the learnable covariance matrix, and
wherein the generator learning module is configured to execute the learning by adjusting values of the learnable covariance matrix based on the spectral loss function.

(4) The learning system according to Item (3),

wherein the predetermined probability distribution is an isotropic Gaussian distribution, and
wherein the portion code acquisition module is configured to acquire the first latent code based on the isotropic Gaussian distribution, and transform the first latent code into the second latent code based on the learnable covariance matrix, to thereby acquire the second latent code following an anisotropic Gaussian distribution.

(5) The learning system according to any one of Items (1) to (4), wherein the generated image generation module is configured to generate the generated image by causing the image synthesis networks to successively repeat convolution and upsampling based on the plurality of portion codes and an initial-state feature map in the generator.
(6) The learning system according to any one of Items (1) to (5), further including a latent code acquisition module configured to acquire: an anchor latent code; and a plurality of feature latent codes respectively corresponding to the plurality of features and having been changed in portions corresponding to the plurality of features out of the anchor latent code,

wherein the portion code acquisition module is configured to acquire a plurality of anchor portion codes being the plurality of portion codes based on the anchor latent code and a plurality of feature portion codes being the plurality of portion codes based on each of the plurality of feature latent codes,
wherein the generated image generation module is configured to acquire: an anchor generated image being the generated image based on the plurality of anchor portion codes; and a plurality of feature generated images respectively corresponding to the plurality of features and each being the generated image based on the plurality of feature portion codes, and
wherein the generator learning module is configured to:

calculate, for each feature space corresponding to each of the plurality of features, based on the discriminator, an anchor generation vector relating to the anchor generated image, a positive generation vector relating to one of the plurality of feature generated images corresponding to the each of the plurality of features, and a negative generation vector relating to one of the plurality of feature generated images corresponding to another of the plurality of features; and
execute the learning such that, in the each feature space corresponding to the each of the plurality of features, the anchor generation vector and the positive generation vector approach each other, and the anchor generation vector and the negative generation vector become distant from each other.

(7) The learning system according to Item (6), wherein the generator learning module is configured to cause the discriminator to estimate authenticity of the anchor generated image, and execute the learning of the generator based further on an estimation result of the authenticity of the anchor generated image.
(8) The learning system according to Item (6) or (7), further including:

a discrimination image acquisition module configured to acquire: an anchor discrimination image; and a plurality of feature discrimination images respectively corresponding to the plurality of features and having been changed in the plurality of features of the anchor discrimination image;

a discrimination vector calculation module configured to calculate, for the each feature space corresponding to the each of the plurality of features, based on the discriminator, an anchor discrimination vector relating to the anchor discrimination image, a positive discrimination vector relating to one of the plurality of feature discrimination images corresponding to the each of the plurality of features, and a negative discrimination vector relating to one of the plurality of feature discrimination images corresponding to another of the plurality of features; and a discriminator learning module configured to execute learning of the discriminator such that, in the each feature space corresponding to the each of the plurality of features, the anchor discrimination vector and the positive discrimination vector approach each other, and the anchor discrimination vector and the negative discrimination vector become distant from each other,

wherein the generator learning module is configured to execute the learning based on the discriminator that has been trained by the discriminator learning module.

(9) The learning system according to Item (8), wherein the discriminator learning module is configured to cause the discriminator to estimate authenticity of the anchor discrimination image and authenticity of the generated image generated by the generator, and execute the learning of the discriminator based further on an estimation result of the authenticity of the anchor discrimination image and an estimation result of the authenticity of the generated image generated by the generator.

(10) The learning system according to Item (8) or (9), wherein the discriminator learning module is configured to cause the discriminator to estimate the authenticity of each of a plurality of the anchor discrimination images, execute normalization relating to an estimation result of the authenticity of each of the plurality of the anchor discrimination images, and execute the learning of the discriminator based further on an execution result of the normalization.

**Claims**

1. A learning system (1) for executing learning of a generator of a generative adversarial network (GAN) which allows a user to control a plurality of features relating to a generated image, the learning system (1) comprising:

   a portion code acquisition module (107) configured to acquire a plurality of portion codes respectively corresponding to the plurality of features based on a latent code for generating the generated image and a plurality of mapping networks respectively corresponding to the plurality of features;
   a generated image generation module (105) configured to generate the generated image based on image synthesis networks configured to generate the generated image through use of the plurality of portion codes; and
   a generator learning module (106) configured to execute the learning of the generator including the plurality of mapping networks and the image synthesis networks based on the generated image and a trained discriminator of the GAN.

2. The learning system (1) according to claim 1,

   wherein the portion code acquisition module (107) is configured to:

   acquire a first latent code based on a predetermined probability distribution;
   transform the first latent code into a second latent code based on a parameter adjustable by the learning; and
   acquire the plurality of portion codes based on the second latent code and the plurality of mapping networks, and

   wherein the generator learning module (106) is configured to execute the learning based on a spectral loss function indicating that a loss decreases as a distance between vectors relating to the plurality of portion codes becomes smaller.

3. The learning system (1) according to claim 2,

   wherein the parameter comprises a learnable covariance matrix,
   wherein the portion code acquisition module (107) is configured to transform the first latent code into the second latent code based on the learnable covariance matrix, and
   wherein the generator learning module (106) is configured to execute the learning by adjusting values of the learnable covariance matrix based on the spectral loss function.

4. The learning system (1) according to claim 3,

   wherein the predetermined probability distribution comprises an isotropic Gaussian distribution, and
   wherein the portion code acquisition module (107) is configured to acquire the first latent code based on the isotropic Gaussian distribution, and transform the first latent code into the second latent code based on the learnable covariance matrix, to thereby acquire the second latent code following an anisotropic Gaussian distribution.

5. The learning system (1) according to any one of claims 1 to 4, wherein the generated image generation module (105) is configured to generate the generated image by causing the image synthesis networks to successively repeat convolution and upsampling based on the plurality of portion codes and an initial-state feature map in the generator.

6. The learning system (1) according to any one of claims 1 to 5, further comprising a latent code acquisition module (104) configured to acquire: an anchor latent code; and a plurality of feature latent codes respectively corresponding to the plurality of features and having been changed in portions corresponding to the plurality of features out of the anchor latent code,

   wherein the portion code acquisition module (107) is configured to acquire a plurality of anchor portion codes being the plurality of portion codes based on the anchor latent code and a plurality of feature portion codes being the plurality of portion codes based on each of the plurality of feature latent codes,
   wherein the generated image generation module (105) is configured to acquire: an anchor generated image being the generated image based on the plurality of anchor portion codes; and a plurality of feature generated images respectively corresponding to the plurality of features and each being the generated image based on the plurality of feature portion codes, and
   wherein the generator learning module (106) is configured to:

   calculate, for each feature space corresponding to each of the plurality of features, based on the discriminator, an anchor generation vector relating to the anchor generated image, a positive generation vector relating to one of the plurality of feature generated images corresponding to the each of the plurality of features, and a negative generation vector relating to one of the plurality of feature generated images corresponding to another of the plurality of features; and
   execute the learning such that, in the each feature space corresponding to the each of the plurality of features, the anchor generation vector and the positive generation vector approach each other, and the anchor generation vector and the negative generation vector become distant from each other.

7. The learning system (1) according to claim 6, wherein the generator learning module (106) is configured to cause the discriminator to estimate authenticity of the anchor generated image, and execute the learning of the generator based further on an estimation result of the authenticity of the anchor generated image.

8. The learning system (1) according to claim 6 or 7, further comprising:

   a discrimination image acquisition module (101) configured to acquire: an anchor discrimination image; and a plurality of feature discrimination images respectively corresponding to the plurality of features and having been changed in the plurality of features of the anchor discrimination image;
   a discrimination vector calculation module (102) configured to calculate, for the each feature space corresponding to the each of the plurality of features, based on the discriminator, an anchor discrimination vector relating to the anchor discrimination image, a positive discrimination vector relating to one of the plurality of feature discrimination images corresponding to the each of the plurality of features, and a negative discrimination vector relating to one of the plurality of feature discrimination images corresponding to another of the plurality of features; and
   a discriminator learning module (103) configured to execute learning of the discriminator such that, in the each feature space corresponding to the each of the plurality of features, the anchor discrimination vector and the positive discrimination vector approach each other, and the anchor discrimination vector and the negative discrimination vector become distant from each other,
   wherein the generator learning module (106) is configured to execute the learning based on the discriminator that has been trained by the discriminator learning module (103).

9. The learning system (1) according to claim 8, wherein the discriminator learning module (103) is configured to cause the discriminator to estimate authenticity of the anchor discrimination image and authenticity of the generated image generated by the generator, and execute the learning of the discriminator based further on an estimation result of the authenticity of the anchor discrimination image and an estimation result of the authenticity of the generated image generated by the generator.

10. The learning system (1) according to claim 8 or 9, wherein the discriminator learning module (103) is configured to cause the discriminator to estimate the authenticity of each of a plurality of the anchor discrimination images, execute normalization relating to an estimation result of the authenticity of each of the plurality of the anchor discrimination images, and execute the learning of the discriminator based further on an execution result of the normalization.

11. A learning method for executing learning of a generator of a generative adversarial network (GAN) which allows a user to control a plurality of features relating to a generated image, the learning method comprising:

acquiring a plurality of portion codes respectively corresponding to the plurality of features based on a latent code for generating the generated image and a plurality of mapping networks respectively corresponding to the plurality of features;

generating the generated image based on image synthesis networks configured to generate the generated image through use of the plurality of portion codes; and

executing the learning of the generator including the plurality of mapping networks and the image synthesis networks based on the generated image and a trained discriminator of the GAN.

12. A program for causing a computer which executes learning of a generator of a generative adversarial network (GAN) which allows a user to control a plurality of features relating to a generated image to function as:

a portion code acquisition module (107) configured to acquire a plurality of portion codes respectively corresponding to the plurality of features based on a latent code for generating the generated image and a plurality of mapping networks respectively corresponding to the plurality of features;

a generated image generation module (105) configured to generate the generated image based on image synthesis networks configured to generate the generated image through use of the plurality of portion codes; and

a generator learning module (106) configured to execute the learning of the generator including the plurality of mapping networks and the image synthesis networks based on the generated image and a trained discriminator of the GAN.

# FIG.1

**SERVER** — 20
- CONTROL UNIT — 21
- STORAGE UNIT — 22
- COMMUNICATION UNIT — 23

**NETWORK**

**LEARNING TERMINAL** — 10
- CONTROL UNIT — 11
- STORAGE UNIT — 12
- COMMUNICATION UNIT — 13
- OPERATION UNIT — 14
- DISPLAY UNIT — 15

**USER TERMINAL** — 30
- CONTROL UNIT — 31
- STORAGE UNIT — 32
- COMMUNICATION UNIT — 33
- OPERATION UNIT — 34
- DISPLAY UNIT — 35

# FIG.2

LATENT CODE → GENERATOR → GENERATED IMAGE → DISCRIMINATOR → real/fake

EP 4 703 971 A1

# FIG.3

10

LEARNING
TERMINAL    100

DATA STORAGE UNIT

DISCRIMINATION
IMAGE DATABASE — DB1

GENERATED
IMAGE
DATABASE — DB2

DISCRIMINATION
IMAGE ACQUISITION — 101
MODULE

DISCRIMINATION
VECTOR CALCULATION — 102
MODULE

DISCRIMINATOR
LEARNING MODULE — 103

LATENT CODE
ACQUISITION — 104
MODULE

GENERATED IMAGE
GENERATION — 105
MODULE

GENERATOR
LEARNING MODULE — 106

PORTION CODE
ACQUISITION — 107
MODULE

# FIG.4

SHAPE FEATURE SPACE

$h^g(x^a)$

$h^g(x)$

$h^g(x^g)$

OUTER APPEARANCE FEATURE SPACE

$h^a(x^g)$

$h^a(x^a)$

$h^a(x)$

DISCRIMINATOR

P $h^g$

P $h^{adv}$ real/fake

P $h^a$

$x$   $x^g$   $x^a$

EP 4 703 971 A1

# FIG.5

EP 4 703 971 A1

DB1

| ANCHOR DISCRIMINATION IMAGE | SHAPE DISCRIMINATION IMAGE | OUTER APPEARANCE DISCRIMINATION IMAGE |
|---|---|---|
| ANCHOR DISCRIMINATION IMAGE 1 | SHAPE DISCRIMINATION IMAGE 1 (IMAGE CHANGED IN SHAPE OF OBJECT REPRESENTED BY ANCHOR DISCRIMINATION IMAGE 1) | OUTER APPEARANCE DISCRIMINATION IMAGE 1 (IMAGE CHANGED IN OUTER APPEARANCE OF OBJECT REPRESENTED BY ANCHOR DISCRIMINATION IMAGE 1) |
| ⋮ | ⋮ | ⋮ |

FIG.6

# FIG.7

EP 4 703 971 A1

DB2

| ANCHOR GENERATED IMAGE | SHAPE GENERATED IMAGE | OUTER APPEARANCE GENERATED IMAGE |
|---|---|---|
| ANCHOR GENERATED IMAGE 1 | SHAPE GENERATED IMAGE 1 (IMAGE GENERATED BASED ON SHAPE LATENT CODE CHANGED IN PORTION CORRESPONDING TO SHAPE OUT OF ANCHOR LATENT CODE) | OUTER APPEARANCE GENERATED IMAGE 1 (IMAGE GENERATED BASED ON OUTER APPEARANCE LATENT CODE CHANGED IN PORTION CORRESPONDING TO OUTER APPEARANCE OUT OF ANCHOR LATENT CODE) |
| ⋮ | ⋮ | ⋮ |

# FIG.8

M — Mapping network

S — 3×3 Convolution + AdaIN + Upsampling

S — 3×3 Convolution + AdaIN

W — Feature warping

C — 1×1 Convolution + Upsampling

C — 3×3 Convolution + AdaIN

$z \sim N(0, I)$

$w^g$

$w^a$

Mapping networks

$w^g$

$w^g$

$w^g$

$4 \times 4 \times 512$
Const

S
C
S
S
W

$8 \times 8 \times 2$
Flowfields

$8 \times 8 \times 512$
Feature Maps

Synthesis block

$w^a$

S
C
S
S
W

$16 \times 16 \times 2$
Flowfields

$16 \times 16 \times 512$
Feature Maps

Synthesis block

$w^a$

S
C
S
S
W

$m \times m \times 2$
Flowfields

$m \times m \times 64$
Feature Maps

Synthesis block

$w^a$

C

Image synthesis networks

EP 4 703 971 A1

# FIG.9

$z \sim N(0, I)$

$U$
(Orthonormal matrix)

$D^{1/2}$
(Eigen-values)

Gram-Schmidt process

$$\left[ \begin{pmatrix} v_1^1 \\ \vdots \\ v_1^k \end{pmatrix} \cdots \begin{pmatrix} v_k^1 \\ \vdots \\ v_k^k \end{pmatrix} \right]$$

Learning parameters
for basis vector V

$$\begin{bmatrix} d_1 & & & \\ & d_2 & & \\ & & \ddots & \\ & & & d_k \end{bmatrix}$$

Learning parameters
for eigen-values d

$\bar{z} = U D^{1/2} z$

Selected features by L1 regularization $\| d \|_1$

EP 4 703 971 A1

# FIG.10

( LEARNING TERMINAL )

↓

| ACQUIRE ANCHOR DISCRIMINATION IMAGE, SHAPE DISCRIMINATION IMAGE, AND OUTER APPEARANCE DISCRIMINATION IMAGE | ~S1 |

↓

| CALCULATE ANCHOR DISCRIMINATION VECTOR, POSITIVE DISCRIMINATION VECTOR, AND NEGATIVE DISCRIMINATION VECTOR | ~S2 |

↓

| EXECUTE LEARNING OF DISCRIMINATOR | ~S3 |

↓

| ACQUIRE ANCHOR LATENT CODE, SHAPE LATENT CODE, AND OUTER APPEARANCE LATENT CODE | ~S4 |

↓

| ACQUIRE SHAPE PORTION CODE AND OUTER APPEARANCE PORTION CODE CORRESPONDING TO ANCHOR LATENT CODE | ~S5 |

↓

| GENERATE ANCHOR GENERATED IMAGE | ~S6 |

↓

| ACQUIRE SHAPE PORTION CODE AND OUTER APPEARANCE PORTION CODE CORRESPONDING TO SHAPE LATENT CODE | ~S7 |

↓

| GENERATE SHAPE GENERATED IMAGE | ~S8 |

↓

| ACQUIRE SHAPE PORTION CODE AND OUTER APPEARANCE PORTION CODE CORRESPONDING TO OUTER APPEARANCE LATENT CODE | ~S9 |

↓

| GENERATE OUTER APPEARANCE GENERATED IMAGE | ~S10 |

↓

| CALCULATE ANCHOR GENERATION VECTOR, POSITIVE GENERATION VECTOR, AND NEGATIVE GENERATION VECTOR | ~S11 |

↓

| EXECUTE LEARNING OF GENERATOR | ~S12 |

↓

( TO BE CONTINUED )

# FIG.11

```
( LEARNING TERMINAL )
        |              S13
        v
TRANSMIT TRAINED
    GENERATOR
        |
        v
      ( END )


  ( USER TERMINAL )
        |              S15
        v
TRANSMIT FEATURE DATA  ─────────►
```

```
    ( SERVER )
        |              S14
        v
RECEIVE TRAINED
   GENERATOR
        |
        v
                       S16
RECEIVE FEATURE DATA
        |
        v
GENERATE LATENT CODE   ─S17
        |
        v
GENERATE GENERATED     ─S18
     IMAGE
        |
        v
```

```
              S20
        v
RECEIVE IMAGE DATA  ◄──── TRANSMIT IMAGE DATA  ─S19
        |                          |
        v                          v
DISPLAY GENERATED  ─S21         ( END )
    IMAGE
        |
        v
     ( END )
```

# EP 4 703 971 A1

**EUROPEAN SEARCH REPORT**

Application Number

EP 25 19 8180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHOSHAN ALON ET AL: "GAN-Control: Explicitly Controllable GANs", 2021 IEEE/CVF INTERNATIONAL CONFERENCE ON COMPUTER VISION (ICCV), 3 October 2021 (2021-10-03), pages 1-11, XP093336749, DOI: 10.1109/ICCV48922.2021.01382 ISBN: 978-1-6654-2812-5 * Abstract, 3. Proposed approach * ----- | 1-12 | INV. G06N3/045 G06N3/0464 G06N3/047 G06N3/0475 G06N3/084 G06N3/094 |
| A | YUKSEL OGUZ KAAN ET AL: "LatentCLR: A Contrastive Learning Approach for Unsupervised Discovery of Interpretable Directions", 2021 IEEE/CVF INTERNATIONAL CONFERENCE ON COMPUTER VISION (ICCV), 6 October 2021 (2021-10-06), pages 1-10, XP093336757, DOI: 10.1109/ICCV48922.2021.01400 ISBN: 978-1-6654-2812-5 * Abstarct, 3. Methodology * ----- | 1-12 | |
| A | WEI YUXIANG ET AL: "Orthogonal Jacobian Regularization for Unsupervised Disentanglement in Image Generation", 2021 IEEE/CVF INTERNATIONAL CONFERENCE ON COMPUTER VISION (ICCV), 17 August 2021 (2021-08-17), pages 1-15, XP093336756, DOI: 10.1109/ICCV48922.2021.00665 ISBN: 978-1-6654-2812-5 * Abstract, 3. Proposed method * ----- -/-- | 1-12 | **TECHNICAL FIELDS SEARCHED (IPC)** G06N |

The present search report has been drawn up for all claims

| Place of search | Date of completion of the search | Examiner |
|---|---|---|
| The Hague | 3 December 2025 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

page 1 of 2

38

Europäisches
Patentamt

European
Patent Office

Office européen
des brevets

## EUROPEAN SEARCH REPORT

**Application Number**

EP 25 19 8180

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | KARRAS TERO ET AL: "A Style-Based Generator Architecture for Generative Adversarial Networks", 2019 IEEE/CVF CONFERENCE ON COMPUTER VISION AND PATTERN RECOGNITION (CVPR), 29 March 2019 (2019-03-29), pages 1-12, XP093336758, DOI: 10.1109/CVPR.2019.00453 ISBN: 978-1-7281-3293-8 * Abstract, 2. Style-based generator, 3. Properties of the style-based generator, 4. Disentanglement studies * | 1-12 | |
| | ----- | | |
| X,P | Lee Sehyung ET AL: "Linearly Controllable GAN: Unsupervised Feature Categorization and Decomposition for Image Generation and Manipulation", 30 September 2024 (2024-09-30), Springer Nature Switzerland, XP093249764, ISSN: 0302-9743 ISBN: 978-3-031-73235-5 vol. 15062, pages 229-245, DOI: 10.1007/978-3-031-73235-5_13, Retrieved from the Internet: URL:https://doi.org/10.1007/978-3-031-73235-5_13> * the whole document * | 1-12 | TECHNICAL FIELDS SEARCHED (IPC) |
| | ----- | | |

The present search report has been drawn up for all claims

| Place of search | Date of completion of the search | Examiner |
|---|---|---|
| The Hague | 3 December 2025 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

**page 2 of 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TERO KARRAS** ; **MIIKA AITTALA** ; **SAMULI LAINE** ; **ERIK HARKONEN** ; **JANNE HELLSTEN** ; **JAAKKO LEHTINEN** ; **TIMO AILA**. Alias-free generative adversarial networks. *Advances in Neural Information Processing Systems*, 2021, vol. 34, 852-863
- **TERO KARRAS** ; **SAMULI LAINE** ; **TIMO AILA**. A style-based generator architecture for generative adversarial networks. *Proceedings of the IEEE/CVF conference on computer vision and pattern recognition*, 2019, 4401-4410

- **TERO KARRAS** ; **SAMULI LAINE** ; **MIIKA AITTALA** ; **JANNE HELLSTEN** ; **JAAKKO LEHTINEN** ; **TIMO AILA**. Analyzing and improving the image quality of StyleGAN. *Proceedings of the IEEE/CVF conference on computer vision and pattern recognition*, 2020, 8110-8119